(19) Europäisches Patentamt
European Patent Office
Office européen des brevets

(11) **EP 3 394 197 B1**

(12) **EUROPÄISCHE PATENTSCHRIFT**

(45) Veröffentlichungstag und Bekanntmachung des Hinweises auf die Patenterteilung:
**12.06.2024   Patentblatt 2024/24**

(21) Anmeldenummer: **16801760.6**

(22) Anmeldetag: **24.11.2016**

(51) Internationale Patentklassifikation (IPC):
**C09J 133/08** (2006.01)   **C08F 220/18** (2006.01)
**C08F 220/20** (2006.01)   **C09J 133/14** (2006.01)

(52) Gemeinsame Patentklassifikation (CPC):
(C-Sets verfügbar)
**C08F 220/1804; C08F 220/1808; C08F 220/20**

(Forts.)

(86) Internationale Anmeldenummer:
**PCT/EP2016/078746**

(87) Internationale Veröffentlichungsnummer:
**WO 2017/108325 (29.06.2017 Gazette 2017/26)**

(54) **VERFAHREN ZUR HERSTELLUNG VON FARBLOSEN UND ALTERUNGSSTABILEN HAFTKLEBEMASSEN AUF POLYACRYLATBASIS**

METHOD FOR PRODUCING COLORLESS AND AGING-RESISTANT, POLYACRYLATE-BASED PRESSURE-SENSITIVE ADHESIVE COMPOUNDS

PROCÉDÉ DE FABRICATION DE SUBSTANCES AUTO-ADHÉSIVES INCOLORES ET RÉSISTANTES AU VIEILLISSEMENT À BASE DE POLYACRYLATES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2015   DE 102015226578**

(43) Veröffentlichungstag der Anmeldung:
**31.10.2018   Patentblatt 2018/44**

(73) Patentinhaber: **tesa SE**
**22848 Norderstedt (DE)**

(72) Erfinder:
• **SPIES, Manfred**
  **24576 Bad Bramstedt (DE)**
• **PILZ, David**
  **22527 Hamburg (DE)**

(74) Vertreter: **tesa SE**
**Hugo-Kirchberg-Straße 1**
**22848 Norderstedt (DE)**

(56) Entgegenhaltungen:
**WO-A1-2011/092108     WO-A1-2016/036632**
**US-A- 3 447 954**

• **DATABASE WPI Week 201066 Thomson Scientific, London, GB; AN 2010-M08422 XP002766010, & KR 2010 0102443 A (SHINHEUNG STATIONERY CO LTD) 24. September 2010 (2010-09-24)**

(52) Gemeinsame Patentklassifikation (CPC): (Forts.)

C-Sets
**C08F 220/20, C08F 220/06;**
**C09J 133/08, C08K 5/053;**
C08F 220/1804, C08F 220/1808, C08F 220/06;
C08F 220/1808, C08F 220/14, C08F 220/06;
C08F 220/1808, C08F 220/1804, C08F 220/20;
C08F 220/1808, C08F 220/1804, C08F 220/325,
C08F 220/06

**Beschreibung**

Die Erfindung betrifft eine Haftklebemasse umfassend eine Polymerkomponente sowie eine Saccharid-Komponente

Aufgrund ihrer schnellen, sauberen und einfachen Verarbeitbarkeit, z.B. in Form von Stanzlingen, ihrer permanenten Klebrigkeit sowie der Tatsache, dass nach der Applikation kein Aushärtungsschritt erfolgen muss, werden heute Haftklebebänder in vielfältigen Bereichen und für unzählige Anwendungen benötigt, die auf unterschiedlichen Untergründen und über einen bestimmten Zeitraum hinweg zuverlässig kleben. Übliche in der Industrie eingesetzte Spezialprodukte haben über den Klebeverbund hinaus zudem noch eine Anzahl weiterer Funktionen zu übernehmen. So sind für den Einsatz in der Elektronikindustrie, beispielsweise im Bereich optischer Verklebungen, halogenfreie, farblose, alterungsstabile Haftklebebänder gefordert. Ebenfalls gibt es in der Bauindustrie, z.B. in der Fassadenverklebung - insbesondere von Glasfassaden wo große Schwankungen von Temperatur und Lichteinstrahlung vorherrschen -, große Einsatzbereiche für farblose, transparente witterungs- und alterungs- und farbstabile Verklebungen, da diese oft sichtbar angebracht ist.

Derzeitig werden derartige Anwendungen mit hoher Transparenz bevorzugt durch polyacrylat-, hydrierte styrolblockcopolymer- oder silikonbasierte Klebebänder abgedeckt.

In den zurückliegenden Jahren hat die Produktion von hochwertigen Displays für Smartphones, Tablet-PCs und weitere elektronische Geräte aufgrund gestiegener Bedarfe und optimierten Herstellungsbedingungen erheblich zugenommen. Gleichermaßen sind die Anwendungsbereiche der zum Einsatz kommenden Geräte stetig gewachsen und immer häufiger werden solche Geräte unter extremen Bedingungen eingesetzt. Als direkte Folge davon sind die Forderungen nach preiswerten, hochwertigen, genau angepassten oder breit einsetzbaren Klebelösungen ebenfalls gestiegen.

Aus dem Einsatz des Klebebandes zum verbindenden Kleben unterschiedlicher Materialien ergibt sich eine Anforderung an die Klebmasse bezüglich ihrer adhäsiven und kohäsiven Eigenschaften. Unter die adhäsiven Eigenschaften (Oberflächeneigenschaft) fällt dabei die Klebkraft (Schälwiederstand) als zentrale Charaktereigenschaft für Klebmassen und Klebefilme im Bezug auf ihre Wechselwirkung mit einem angebotenen Substrat. Eine weitere Hauptcharakterisierungsgröße sind die kohäsiven Eigenschaften, die die innere Festigkeit der Klebmasse gegenüber physikalischen Beanspruchungen beschreiben, wie z.B. das Verhalten gegenüber statischer Scherbeanspruchung. Da sich beide Eigenschaften gegenläufig verhalten, wird angestrebt, stets ein ausbalanciertes und auf die Fügeteile abgestimmtes Optimum zu finden, sofern es nicht gelingt gleichzeitig beides, Adhäsion und Kohäsion, zu verbessern.

Eine derartige Anpassung der Klebematerialien an die Einsatzbedingungen (z.B. Temperatur, mechanische Beanspruchung oder Recycling) ist in der Regel aufwändig und schwierig. Oft gelingt eine Optimierung der Klebmasse durch geeignete Kombination von hochmolekularen Basiselastomeren mit sehr niedriger Glasübergangstemperatur (Tg), z.B. Naturkautschuk, Synthesekautschuke, Acrylatkautschuke oder elastischen Polyurethane, mit niedrigmolekularen Klebharzen mit hohem Tg, z.B. auf Kolophonium-, Terpen-, oder Kohlenwasserstoffbasis. In Ausnahmefällen kann auch ein hoch-Tg-Elastomer mit Weichmachern modifiziert werden um zu einem ähnlichen Ergebnis zu gelangen. Für die Auswahl geeigneter Rohstoffe sind weiterhin die Verträglichkeit untereinander sowie die Anpassung an die vorgesehenen Klebeuntergründe wichtige Ausschlusskriterien, die allerdings die in Frage kommenden Rohstoffe stark einschränkt.

Für Haftklebemassen stellen die (meth)acrylatbasierten Kautschuke mit hohen Molekulargewichten (z.B. Mw > 500.000 g/mol) eine wichtige Rohstoffklasse mit sehr guten Eigenschaften dar. Derartige Haftklebemassen zeichnen sich durch eine hoher Temperatur-, Chemikalien- und Alterungsbeständigkeit aus und eignen sich demzufolge insbesondere gut für qualitativ hochwertige Verklebungen (z. B. im Elektronikbereich). Die Herstellung erfolgt üblicherweise durch Copolymerisation geeigneter Monomergemische in organischen Lösungsmitteln, wässriger Emulsion oder in Substanz. Die Haupteinflussgröße zur Steuerung der klebtechnischen Eigenschaften anhand der Basispolymereigenschaften ist vor allem das Molekulargewicht der so erzeugten Basispolymere sowie die erhaltene Glasübergangstemperatur (Tg), die anhand einer geeigneten Auswahl der Monomere abgeschätzt und gezielt eingestellt werden kann. Generell sind hier Glasüberganstemperaturen im Bereich unter 0°C, vornehmlich aber zwischen -95°C und -30°C besonders für Klebmassen geeignet.

Über die Art und den Grad der Vernetzung lässt sich zwischen den linearen Polymerketten ein Netzwerk ausbilden und die Kohäsion der Polymermatrix weiter steuern, indem das viskoelastische Verhalten durch steigende Vernetzung von viskos graduell bis hin zu elastisch eingestellt wird. Durch die geeignete Zugabe von Vernetzern oder durch den Einfluss von Strahlung bzw. Wärme erhält man besonders gut geeignete schwach vernetzte Klebmassen. Beim Einsatz von Strahlungsvernetzung, insbesondere UV-Vernetzung muss außerdem beachtet werden, dass die in der Klebmasserezeptur enthaltenen Zusätze (z.B. Harze) nicht mit der Vernetzungsreaktion wechselwirken, also im entsprechenden Bereich UV-stabil und UV-transparent sind, um unerwünschte Nebenreaktionen (z.B. Verfärbung) und ungleichmäßige Vernetzung zu vermeiden.

Für die Formulierung sind die Menge und Art der Zusätze, insbesondere aber Klebharze oder Weichmacher zunehmend entscheidend. Bei beiden Rohstoffen, Klebharzen und Weichmachern handelt es sich um niedermolekulare Verbindungen mit Molmassen < 50.000 g/mol, vornehmlich aber < 2.000 g/mol. Sie unterscheiden sich entsprechend ihrer Funktion in ihren physikalischen Eigenschaften so, dass Weichmacher typischerweise niedrigschmelzende Stoffe mit Erweichungspunkt unter 40°C, insbesondere aber Flüssigkeiten sind, wie z.B. viele Öle oder flüssige Phtalsäureester, die aufgrund ihrer geringen eigenen Glasübergangstemperatur (Tg < 0°C) die Gesamtglasübergangstemperatur der Mischung - ausgehend vom ursprünglichen Hoch-Tg-Polymer wie z.B. Polyvinylchlorid (PVC) oder Polyethylenterephthalat (PET) - verringern. Klebharze, insbesondere für Acrylatklebmassen, weisen hingegen hohe Erweichungspunkte über 70°C, typischerweise aber zwischen 90°C und 160°C auf. Wichtige Vertreter sind terpen-, phenol-, kolophonium- oder naphtabasierte Harze. Ihre hohen inhärenten Glasübergangstemperaturen (Tg's > 30°C) dienen beim Einsatz in Basispolymeren der Tg-Erhöhung und der Steigerung der Scherfestigkeit unter Temperaturbelastung. Zum Einsatz kommen hierbei Konzentrationen zwischen 0% und 70%, vornehmlich aber zwischen 10% und 40%.

Bei der Rezepturentwicklung sind immer noch viele zusätzliche Anforderungen zu erfüllen. So ist, neben Qualität und Wirtschaftlichkeit, insbesondere die gute Prozessierbarkeit (vor allem Beschichtungs-, Schneid- und Stanzverhalten) eine ausgesprochen wichtige und sicherzustellende Eigenschaft. Auch wenn die oben genannte Aufgabe bereits von enormer Komplexität ist, besteht darüber hinaus häufig noch die Notwendigkeit, die Klebmasse an Spezialanforderungen anzupassen.

Daher sind im Zusammenhang mit ihrer großen Einsatzbreite zunehmend auch spezielle einseitige und doppelseitige Haftklebebänder in den Focus der Optik- und Elektronikanwendung gerückt. Die wesentlichen Gestaltungsformen umfassen dabei doppelseitige einschichtige trägerlose Transferklebestreifen, die mit einer oder zwei antiadhäsiv beschichteten Außenlagen (Release-Linern) abgedeckt sind, doppelseitige zwei- oder mehrschichtige Klebestreifen mit einem ein- oder mehrschichtigen Träger, die mit einer oder zwei antiadhäsiv beschichteten Außenlagen abgedeckt sind sowie einseitig haftklebrige Klebestreifen mit einem ein- oder mehrschichtigen Träger, die mit einer antiadhäsiv beschichteten Release-Linern abgedeckt sind.

Insbesondere für teil- und vollflächige Verklebungen in Displayanwendungen, Touchsensorenanwendungen, Coverglasverklebungen oder Oberflächenschutzverklebungen sind Klebelösungen mit hoher Transparenz und Farbechtheit der Verklebung von essentieller Bedeutung. In der Patentliteratur existiert eine Vielzahl von Anmeldungen, die haftklebende Materialien für die Anwendung in optischen Verklebungen beanspruchen. Hierbei handelt es sich im Wesentlichen um Haftklebebänder auf Polyolefin- und Polyacrylatbasis. Bei den Haftklebemassen handelt es sich bevorzugt um wässrige oder lösemittelhaltige Polyacrylatformulierungen. Solche Haftklebebänder zeigen die Schriften WO 2005063906 A und DE 203 15 592 U. Des Weiteren wurden im zurückliegenden Zeitraum technische Klebebänder für den Einsatz im Elektronikbereich auf Basis lösungsmittelfreier UVvernetzbarer Polyacrylate beschrieben, siehe hierzu die EP 1548 080 A.

KR 2010 0102443 offenbart einen festen Kleber umfassend 30-70 Gew.-% einer Polymerkomponente und 5-40 Gew.-% einer Saccharid-Komponente, insbesondere Glucose, Fructose und/oder Sucrose und deren Mischung.

US 3 447 954 offenbart eine Klebstoffzusammensetzung umfassend mindestens 30 Gew.-% einer Polymerkomponente und bis zu 50 Gew.-% einer Saccharid-Komponente,

WO 2011/092108 offenbart eine Polyacrylat-Haftklebemassen und die Verwendung der Haftklebemasse zur Verklebung von Substraten in elektronischen Konsumgüterartikeln.

Die Transparenz als optische Eigenschaft des Materials wird maßgeblich durch die Transmission $T_\lambda$ bzw. die Extinktion $E_\lambda$ entsprechend dem Lambert-Beerschen Gesetz beeinflusst. Dabei wird die Abschwächung der Intensität $I_0$ des das Material durchdringenden Lichtes einer bestimmten Wellenlänge $\lambda$ beschrieben auf den Wert I beschrieben. Die Extinktion ist abhängig von der Schichtdicke d des Materials, vom dekadischen molaren Extinktionskoeffizienten $\varepsilon_\lambda$ des absorbierenden Stoffes und von seiner Konzentration c im Probenmaterial. $E_\lambda$ ist gegeben durch die Gleichung (I), die ebenfalls für den UV-Bereich gilt und daher zur Bewertung einer Klebmassekomponente für deren Eignung beim Einsatz in der UV-Vernetzung herangezogen werden kann:

$$E_\lambda = \lg(1/\tau_\lambda) = \lg(I_0/I) = \varepsilon_\lambda \, c \, d \qquad (I)$$

Von transparenten Verklebungen (im Sinne der in der vorliegenden Schrift vorgestellten Erfindung) spricht man bei einer Transmission von $T_\lambda$ > 95%, bevorzugt $T_\lambda$ > 99%. Dabei spielt auch die Farbigkeit einer Substanz eine wesentliche Rolle bei der Transparenz, da diese eine sich im sichtbaren Bereich abspielende wellenlängenabhängige Veränderung des Extinktionskoeffizienten $\varepsilon_\lambda$ repräsentiert. Vereinfacht gibt man den Farbwert einer Probe als Koordinate im dreidimensionalen L*a*b*-Farbraum an, der den Bereich der vom Menschen wahrnehmbaren Farben abdeckt. Wobei L* die Helligkeits-, a* die grün-rot-und b* die gelb-blau-Koordinatenachsen beschreiben. Bei Harzen sind positive b*-Werte besonders häufig zu finden, da fast alle Harze eine gewisse Gelbfärbung aufweisen. Besonders macht sich diese bei sogenannten Dickschichtanwendungen (z.B. Fügeverbund zwischen den Kanten zweier Glasscheiben) aufgrund der hohen Schichtdicke d bemerkbar.

Ebenfalls sind z.B. Fehlstellen in der Verklebung durch Luft- oder Verunreinigungseinschlüsse aufgrund von Lichtstreuung (Haze) immer sichtbar. Dabei kann die Lichtstreuung durch physikalische Prozesse (z.B. Oberflächenunebenheiten/Kratzer) oder chemische Prozesse (z.B. ungleichmäßige Verteilung/Migration von Rezepturkomponenten innerhalb der Klebmasse oder Feuchtigkeitsaufnahme) zustande kommen. Ein Maß für die Streuung einer Schicht oder eines beliebigen transparenten Messobjektes ist dessen Trübung, auch Großwinkelstreuung oder Haze. Dabei handelt es sich gemäß ASTM D 1003 um den Anteil des gesamten durch ein Messobjekt gehenden Lichts, der im Messobjekt eine Richtungsablenkung um mehr als 2,5° erfährt, also aus dem gerichteten Strahl heraus gestreut wird. Haze Werte von H > 5%, im engeren Sinne sogar H > 3% sind in letzter Konsequenz für optische Verklebungen unbrauchbar und werden ebenso wie Verfärbungen (z.B. |b*| > 1) oder Trübungen (z.B. durch alterungsbedingte Feuchtigkeitsaufnahme) im Klebefilm/Display vom Kunden nicht toleriert.

Gerade an diesen Anforderungen an sichtbare Verklebungen, insbesondere in transparenten, optischen Anwendungen, scheitern sehr viele der in Klebebändern bevorzugt eingesetzten Rohstoffklassen. Insbesondere zeigen alle Klebharze auf Kolophonium-, Polyterpen-, oder Kohlenwasserstoffbasis eine starke Eigenfärbung oder eine zeitliche Farb- oder Transparenzänderung unter Einwirkung von Licht, Temperatur, Luftfeuchte oder Sauerstoff. Was in anderen Anwendungen von Klebebändern unproblematisch ist, wenn z.B. die Verklebungsstelle nicht sichtbar angebracht ist, ist für transparente Anwendungen ein bedeutendes Ausschlusskriterium (siehe EP 157 455 A).

Trotz ihrer besonderen klebrigkeitsverbessernden Wirkung kommen daher fast keine Klebharze in Spezialanwendungen wie Displayverklebungen zum Einsatz und man begnügt sich mit den stark eingeschränkten Möglichkeiten harzfreier Systeme. Gelegentlich liefert die Verringerung der Schichtdicke des Klebestreifens, was entsprechend dem Lambert-Beer-Gesetz eine Steigerung der Transparenz bewirkt, einen Kompromiss. Im Gegenzug verliert man jedoch an klebtechnischer Performance und Spielraum, um unebene oder speziell geformte Untergründe durch unterschiedliche Schichtdicken auszugleichen bzw. Druck- und Stoßbelastungen, die vom Klebmassevolumen aufgenommen werden müssen, genügend standzuhalten.

Eine weitere Ausnahme bilden Massen für Anwendungen mit weniger strengen Anforderungen an die Transparenz, die eines der wenigen verbleibenden schwach farbigen bzw. farblosen Harze wie z.B. hydrierte Kolophoniumderivate enthalten. Häufig zeigen aber auch diese veredelten Harze eine Neigung zur Farbveränderung durch Alterung und müssen in der Klebmasse durch weitere Additive wie primäre und sekundäre Alterungsschutzmittel sowie UV-Absorber stabilisiert werden, bzw. muss der Effekt durch Pigmentierung kompensiert werden. Als Alterungsschutzmittel kommen z.B. sterisch gehinderte Phenole und Amine, Phosphite sowie organische Sulfide in Betracht. Bevorzugt werden sterisch gehinderte Phenole, z.B. Handelsname Irganox® und Alterungsschutzmittel, bei denen primäre und sekundäre Alterungsschutzwirkungen in einem Molekül vereint sind eingesetzt.

Durch den Einsatz von Alterungsschutzmitteln generiert man zumeist an anderer Stelle neue unerwünschte Nebeneffekte (z.B. Einbußen im klebtechnischen Leistungsprofil, keine Möglichkeit der UV-Vernetzung). Außerdem bietet der Zuschlag von Alterungsschutzmitteln keinen dauerhaften Schutz, sondern verzögert den unerwünschten Effekt nur um gewisse Zeit nach hinten. Eine Lagerung bzw. Verarbeitung im feuchtwarmen Klima (z.B. bei der Produktion in Asien) oder der Einsatz unter kritischen Bedingungen (z.B. in Saunainnenräumen, in der Nähe heißer Maschinen oder in Außenanwendungen mit hoher UV-Belastung) ist dann nur eine bestimmte Zeit lang möglich.

Für die Verwendung hydrierter Harze müssen diese allerdings mittels aufwendiger Verfahren (z.B. katalytische Hydrierung unter hohem Druck bis 200 bar und bei hohen Temperaturen) hergestellt werden und sind aufgrund ihrer geringen Polarität nicht mit allen Polymertypen verträglich. Aber gerade die Verträglichkeit zwischen Harz und Basispolymer ist ein weiterer wesentlicher einschränkender Faktor bei der Harzauswahl. Bereits geringe Unverträglichkeiten (ungenügend übereinstimmende Löslichkeitseigenschaften) von Harz und Polymer können zur Ausbildung einer Trübung aufgrund von Phasenseparation (vornehmlich Abscheidung der hochmolekularen Harzbestandteile) kommen. Sofern die Molekularstrukturen von Polymer und Harz bekannt sind, lassen sich die Löslichkeitseigenschaften der Stoffe anhand tabellierter Werte für funktionelle Gruppen errechnen. Gute Übereinstimmung der Werte lässt auf gute Verträglichkeit schließen. Bei schlechter Verträglichkeit kann durch geeignete chemische Veränderung der Molekülstruktur die Verträglichkeit verbessert werden.

Einen groben Eindruck über die Löslichkeitseigenschaften liefern die Trübungspunktmessmethodern MMAP (von Harzen in einer 2:1 Mischung (vol-%) aus Methylcyclohexan und Anilin, entsprechend der internen Methodede H90-5 der Firma Hercules) und DACP (von Harzen in einer 1:1 Mischung (w-%) aus Xylol und 4.Hydroxy-4-methyl-2-pentanon (Diaceton Alkohol) entsprechend der internen Methodede H90-4a der Firma Hercules). Dabei wird jeweils die Temperatur bestimmt, bei der das Harz unlöslich zu werden beginnt. Niedrige MMAP-Werte (<40°C) beschreiben hocharomatische Harze, hohe MMAP-Werte (>75°C) hingegen aliphatische oder hydierte Testsubstanze. Und niedrige DACP-Werte (< 0°C) kennzeichnen hochpolare Harze mit hoher spezifischer Adhäsion zu polaren Untergründen wie Polyester, Aluminium oder Stahl, während hohe DACP-Werte (> 0°C) schwachpolare Harze für niedrigpolare Untergründe kennzeichnen.

In keiner der aufgeführten Schriften ist jedoch ein Ansatz offenbart, der neben der Einstellung des speziellen klebtechnisch-anwendungstechnischen Leistungsprofils auch noch eine gute Transparenz, Alterungsbeständigkeit und Farbstabilität aufweist und ein verbessertes Beschichtungsverhalten im Hinblick auf Prozessgängigkeit, Qualität und Wirtschaftlichkeit gewährleistet. Zumeist wird berichtet, dass die Harzkomponente die Haftklebmasse im Hinblick auf Farbe und Alterungsstabilität negativ beeinflusst.

Es besteht daher die Notwendigkeit, - insbesondere für die Anwendung im elektro-optischen Bereich, aber nicht darauf beschränkt - Haftklebemassen zur Verfügung zu stellen, die eine ausgezeichnete Balance aus kohäsiven und adhäsiven Eigenschaften aufweisen und gleichzeitig verbesserte Transparenz, verbesserte Alterungsbeständigkeit und verbesserte Farbstabilität zeigen. Zudem besteht im Hinblick auf die weltweit verknappenden Ressourcen die zusätzliche Aufgabe vermehrt auf biobasierte oder recycelte Rohstoffe auszuweichen. Weiterhin sind Materialeigenschaften wie Reinheitsgrad (Farbe), Geruch, Glasübergangstemperatur, Wirtschaftlichkeit, Kompatibilität mit anderen Formulierungsbestandteilen und vermindertes Gefährdungspotenzial, die sich positiv von denen aus dem Stand der Technik bekannten Eigenschaften abheben, wünschenswert, welche die mit ihnen verbundene Nachteile lösen.

Aufgrund der zusätzlichen optischen Anforderungen (hohe Transparenz, geringe Farbigkeit) zu den mechanischen Anforderungen (klebtechnisches Leistungsprofil wie z.B. Adhäsion, Kohäsion) an Klebebänder für sichtbare bzw. optische Verklebungen, bevorzugt aber im Optik-, Optoelektronik- oder Fassadenbaubereich, z.B. Für Anzeigetafelverklebungen (Displayverklebungen), Berührungssensoren/tafeln (Touchsensoren), Deckglasverklebungen (Coverglas-) oder Oberflächenschutzstreifen wäre der Einsatz farbloser Klebharze jedoch sehr häufig wünschenswert. Verbesserungswürdig sind hier in erster Linie die Trübung, die Farbe bzw. die Farbstabilität von klebharzmodifizierten Haftklebemassen bzw. Klebharz enthaltenden Klebebändern und im speziellen die Eigenfärbung, die Farbstabilität und die Verträglichkeit von Klebharzen mit den unterschiedlichen eingesetzten Klebmassekomponenten.

Die Aufgabe konnte erfindungsgemäß gelöst werden durch eine Haftklebemasse, wie sie im Hauptanspruch näher dargestellt ist. Darauf rückbezogene Unteransprüche betreffen vorteilhafte Ausgestaltungen der Haftklebemasse. Gegenstand der Erfindung ist weiter die Verwendung der Haftklebemasse für Verklebungen von Substraten und/oder in Geräten für Optik- und Elektronikanwendungen oder in der Bauindustrie sowie vorteilhafte Weiterentwicklungen dieser Verwendung.

Erfindungsgemäß wurde gefunden, dass die beschriebene Aufgabe durch die Verwendung einer Haftklebemasse, umfassend mindestens eine Saccharidkomponente, sowie eine Polymerkomponente, wie im Folgenden näher ausgeführt, gelöst werden konnte. Der daraus erhaltene Klebefilm besitzt die gewünschten - insbesondere die klebtechnischen und optischen - Eigenschaften.

Dabei dienen die Saccharidderivate als Ersatz für Hoch-Tg-Klebharze in Poly(meth)acrylat-haftklebmassen beziehungsweis in mit solchen Klebmassen hergestellten Klebebändern.

Erfindungsgemäß umfasst die Haftklebemasse eine Polymerkomponente, die mindestens 30 Gew.-% der Haftklebemasse ausmacht, bis zu 50 Gew.-% (bezogen auf die Haftklebemasse) einer Saccharid-Komponente, sowie ggf. weitere Komponenten oder Additive.

In bevorzugter Weise ist die Saccharid-Komponente zu 5 bis 40 Gew.-% in der Haftklebemasse enthalten.

Die Saccharid-Komponente wird aus einem oder mehreren Saccharidderivaten, gewählt aus der Liste aus Glucoseacetat, Glucosebenzoat, Saccharoseacetat, Saccharosebenzoat und einer Mischung von Hexa-, Hepta- und Octaestern aus der Veresterung von Saccharose mit den Fettsäuren aus Rapsöl, Sonnenblumenöl oder Palmöl gebildet.

Als modifizierte Saccharidderivate werden im Sinne dieser Schrift solche Verbindungen aufgefasst, die sich von Mono-, Di-, Oligo- oder Polysacchariden durch Modifikation einer, mehrerer oder sogar aller im Saccharid enthaltener OH-Gruppen ableiten lassen. Bei den modifizierten Saccharidderivaten handelt es sich somit um besondere Polyolderivate, nämlich substituierte Saccharide. Bei mehreren substituierten OH-Gruppen können die Substituenten gleich (gleich-substituierte Saccharidderivate) oder unterschiedlich (gemischt-substituierte Saccharidderivate) gewählt werden.

Im Rahmen dieser Schrift werden die nicht-substituierten Mono-, Di-, Oligo- oder Polysaccharide, von denen sich die Saccharidderivate ableiten lassen, zur sprachlichen Unterscheidung auch als Saccharidgrundgerüste bezeichnet.

Als Saccharidkomponente kann ein Saccharidderivat eingesetzt werden, es können aber auch mehrere Saccharidderivate gleichzeitig zum Einsatz kommen. Bei mehreren eingesetzten Saccharidderivaten können diese so gewählt werden, dass nur Saccharidderivate mit gleichen zahlenmittleren Molmassen $M_n$ nur solche mit unterschiedlichen zahlenmittleren Molmassen $M_n$ oder sowohl solche mit gleichen als auch solche mit unterschiedlichen zahlenmittleren Molmassen $M_n$ zum Einsatz kommen. Die Additive können weiterhin so gewählt werden, dass nur gleich-substituierte, oder nur gemischt-substituierte, oder sowohl gleich-substituierte als auch gemischt-substituierte Saccharidderivate zum Einsatz kommen.

Überraschenderweise wurde gefunden, dass die Saccharidkomponente und die Polymerkomponente vollständig miteinander kompatibel sind, so dass eine farblose, transparente, farbstabile, alterungstsabile Haftklebemasse erhalten wird. Demgemäß betrifft die Erfindung eine farblose saccharidmodifizierte Haftklebemasse, die sich insbesondere durch ihre Licht-, Temperatur-, Feuchtigkeits- und Alterungsbeständigkeit für den Einsatz in Haftklebebändern zum Beispiel für die Elektronikindustrie auszeichnet. Die saccharidmodifizierten Klebemassen können lösemittelfrei durch UV-Polymerisation oder aus Polymerschmelzen bzw. Dispersion oder Lösung hergestellt werden.

Bevorzugt wird die Saccharid-Komponente durch eines oder mehrere Saccharidderivate gebildet wird, die als reine Verbindungen im sichtbaren ($\lambda$ = 380 nm bis 780 nm) Bereich nur schwach farbig (($L^* \geq 95$, $|a^*| < 5$ und $|b^*| < 5$), besonders bevorzugt farblos ($L^* \geq 99$, $|a^*| < 1$ und $|b^*| < 1$) sind. Weitere bevorzugte Ausführungen sind alternativ oder außerdem auch im ultravioletten Bereich ($\lambda$ = 10 nm bis 880 nm) nur schwach farbig, bevorzugt farblos.

In einer weiteren vorteilhaften Ausführung der Erfindung werden solche Saccharidderivate eingesetzt, die chiral aufgebaut sind, optisch aktiv sind und die Polaisationsebene von polarisiertem Licht beim Durchstrahlen drehen.

In einer vorteilhaften Ausführung der Erfindung umfasst die Haftklebemasse eine Saccharidkomponente aus mindestens zwei Saccharidderivaten, wobei auch drei oder mehr Saccharidderivate eingesetzt werden können. Das Verhältnis der Mengen der einzelnen Saccharidderivate kann grundsätzlich jeden Wert annehmen, bevorzugt liegen bei einem Gemisch von zwei Saccharidderivaten diese aber im Verhältnis von 10 : 90 bis 50 : 50 vor. Die Verwendung eines Gemisches, insbesondere in dem angegebenen Mengenverhältnis, führt zu einer verbesserten Verträglichkeit mit dem Basispolymer indem eine mögliche Kristallisationsneigung und Entmischung in der Klebmasse unterdrückt wird.

In einer weiteren vorteilhaften Ausführung der Erfindung umfasst die Haftklebemasse neben der Saccharidkomponente - im Sinne der oben genannten weiteren Komponenten der Haftklebemasse - eine Klebharzkomponente (Definition von Klebharzen siehe einführenden Teil). Das Verhältnis der Mengen der Saccharidkomponente zur Klebharzkomponente kann grundsätzlich jeden Wert annehmen, liegt aber bevorzugt zwischen 10 : 90 und 90 : 10 vor. Die Verwendung eines Saccharidkomponente und einer Klebharzkomponente, insbesondere in dem angegebenen Mengenverhältnis, führt ebenfalls zu einer verbesserten Verträglichkeit mit dem Basispolymer indem eine mögliche Kristallisationsneigung und Entmischung in der Klebmasse unterdrückt wird.

Beispiele für erfindungsgemäß hervorragend einsetzbare Klebharze sind aliphatische Kohlenwasserstoffharze, aromatische Kohlenwasserstoffharze, aliphatisch-aromatische Kohlenwasserstoffharze, Terpenharze, Phenolharze, Terpenphenolharze, Kolophoniumharze, Acrylatharze, Polyketonharze.

Sofern Klebharze eingesetzt werden, sind diese bevorzugt farblos und alterungsstabil.

In einer anderen vorteilhaften Ausführung der Erfindung wird auf die Anwesenheit von Klebharzen verzichtet (klebharzfreie Haftklebemasse).

In bevorzugter Weise zeichnet sich das erfindungsgemäß eingesetzte Saccharidderivat durch eine geringe Farbigkeit ($L^* \geq 95$, $|a^*| < 3$ und $|b^*| < 3$), besonders bevorzugt aber durch absolute Farblosigkeit in sichtbaren Bereich ($L^* \geq 99$, $|a^*| < 1$ und $|b^*| < 1$), oder im für die jeweilige Anwendung benötigten Wellenlängenbereich (z.B. UV, IR oder bei bestimmten Laserlichtwellenlängen) aus. In der besonders bevorzugten Ausführungsform der Erfindung zeigt das Saccharidderivat zudem eine hohe alterungs-, temperatur- und/oder Lichtbeständigkeit sowie eine gute biologisch Abbaubarkeit und behält demzufolge seine vorzüglichen physikalisch-chemischen Eigenschaften sowohl bei der Lagerung in Reinform als auch in der Klebmasse permanent bei.

Das erfindungsgemäß eingesetzte Saccharidderivat ist weiterhin insbesondere dadurch gekennzeichnet, dass es eine für Klebharze bzw. Weichmacher typische Molmasse, bzw. Molmassenverteilung aufweist, also eine solche, die kleiner als 100.000 g/mol ist, bevorzugt im Bereich zwischen 100 und 10.000 g/mol und besonders bevorzugt zwischen 500 und 3.500 g/mol liegt. Vorteilhaft bestehen die eingesetzten Saccharidderivate aus modifizierten oder unmodifizierten Polyolen, die von offen- oder geschlossenkettigen Saccharidgrundgerüsten abgeleitet sind. Bevorzugte Saccharidgrundgerüste beinhalten die Strukturelemente von natürlichen oder synthetischen Mono- Di-, Oligo- oder Polysacchariden.

Hierin werden Saccharidderivate beschrieben, die Mono-, Di- und Oligosaccharidgerüste aufweisen, ausgewählt aus der Gruppe bestehend aus

- Monosacchariden, wie z.B. Allose, Altrose, Glucose, Mannose, Gulose, Idose, Galactose, Talose, Psicose, Fructose, Sorbose, Tagatose, Ribose, Arabinose, Xylose, Lyxose, Ribulose, Xylulose, Erythrose, Threose, Erythrulose, Glycerinaldehyd, Dihydroxyaceton,
- Disacchariden, wie beispielsweise Cellobiose, Gentiobiose, Isomaltose, Isomaltulose, Lactose, Lactulose, Laminaribiose, Maltose, Maltulose, Melibiose, Neohesperidose, Neotrehalose, Nigerose, Rutinose, Sambubiose, Sophorose, Saccharose oder Trehalose,
- Trisacchariden, wie z.B. Fucosidolactose, Gentianose, Isokestose, Kestose, Maltotriose, Manninotriose, Melezitose, Neokestose, Panose, Raffinose, Umbelliferose, oder von Oligosacchariden, wie z. B. Cyclodextrine,
- kurzkettigen Polysaccaridderivaten, z.B. aus Stärke, Glycogen, Cellulose, Hemicellulose, Pektin, Chitin, Callose und weiteren Homo- und Heteroglykanen,
- Gemischen aus den vorgenannten, wie Stärkehydrolysate, Hemicellulosehydrolysate, Glycogenhydrolysate, Cellulosehydrolysate, Pektinhydrolysate, Chitinhydrolysate, Callosehydrolysat,
- anderen Glycosiden,
- Alditolen (Zuckeralkoholen), wie z.B. Mannit, Sorbit, Galaktit, Fucit, Idit, Inosit, Cyclohexanhexol, Cyclopentanpentanol, Arabit, Xylit, Ribit, Erythrit, Threit, Glycerin, Sorbitan

- höheren Zuckeralkoholen, wie z.B. Isomalt, Maltit, Lactit, oder von hydrierter Stärkehydrolysate, hydrierter Cellulosehydrolysate

  abgeleitet sind oder mit diesen identisch sind, wobei diese Aufzählung nicht abschließend ist.

In der erfindungsgemäßen Hafklebemasse wird das eine oder eines der mehreren Saccharidderivate gewählt aus der Liste aus Glucoseacetat, Glucosebenzoat, Saccharoseacetat, Saccharosebenzoat, Olestra. Bei Olestra handelt es sich um einen Fettersatzstoff aus der Gruppe der Saccharoseester, nämlich eine Mischung von Hexa-, Hepta- und Octaestern aus der Veresterung von Saccharose mit den Fettsäuren aus Rapsöl, Sonnenblumenöl oder Palmöl. Durch geeignete Auswahl der Fettsäure-Ketten, deren Anzahl, Länge und Sättigungsgrad, lässt sich Olestra mit fast jedem Schmelzpunkt und jeder beliebigen Viskosität produzieren. In bevorzugter Weise hat die Saacharidkomponente einen Erweichungspunt zwischen - 150 °C und 180 °C und/oder einen Glasübergangsbereich (Tg) zwischen - 200 °C und 130 °C, bevorzugt zwischen - 100 °C und - 50 °C oder alternativ bevorzugt zwischen 80 °C und 120 °C.

Die Auswahl der funktionellen Gruppen erfolgt erfindungsgemäß bevorzugt so, dass eine dem Fachmann bekannte Anpassung der Materialeigenschaften an das der Klebmasse zugrundeliegende Basispolymer dahingehend erfolgt, dass bevorzugt ähnliche Löslichkeitseigenschaften eingestellt werden, sodass eine gute Verträglichkeit zu den anderen Komponenten der Haftklebemasse resultiert. Eine einfache Überprüfung der Polarität bzw. Aromatizität erfolgt dabei bevorzugt mittels Trübungspunktbestimmung (MMAP- und DACP-Methoden). Gleichzeitig kann durch die Auswahl geeigneter funktioneller Gruppen bzw. Funktionalisierung die Anpassung anderer wichtiger Materialeigenschaften, etwa im Hinblick auf den Erweichungspunt und Glasübergangstemperatur, bewirkt werden, nämlich so, dass bevorzugt eine Verbindung mit weichmachender Wirkung [niedriger Erweichungspunkt (<40°C) und Tg (<0°C)], besonders bevorzugt aber mit der Wirkung eines Klebharzes [hoher Erweichungspunkt (>40°C) und hoher Tg (>0°C)] erhalten wird.

Geeignete funktionelle Gruppen am Saccharidgrundgerüst werden durch Modifikation der OH-Gruppen bzw. der OH-Gruppen tragenden Kohlenstoffatome erzielt; beispielweise durch Alkylierung, Dehydratisierung, Oxidation zum Aldehyd, zum Keton bzw. zur Säure, Peroxysäure oder zum Säureanhydrid, durch Veresterung, Veretherung, durch Halognierung, durch Laktonisierung, durch Azetal- bzw. Halbazeltalbildung, durch Aminierung, Hydrazidbildung, oder durch Komplexierung mit Metallionen, wobei diese Aufzählung nicht abschließend ist. Dementsprechend kann man erfindungsgemäß die entsprechenden Modifizierungsprodukte der zuvor genannten Saccharidgrundgerüste so realisieren, dass man sie beispielsweise von Dehydrozucker, Thiozucker, Aminozucker, Zuckersäuren, Zuckerethern, Halogenzucker, besonders bevorzugt aber von Zuckerestern erhält und diese erfindungsgemäß verwendet.

Die Veresterung als technisch besonders einfach zu realisierenden chemische Modifikation des Sachharidgrundgrüstes stellt erfindungsgemäß das bevorzugt Funktionalisierungsverfahren zur Herstellung eines erfindungsgemäß verwendbaren Saccharidderivats dar. Die bei der Veresterung der am Gerüst befindlichen OH-Gruppen unter Mono-, Di-, Oligo- oder Poylesterbildung zum Einsatz kommenden Reaktionspartner (Säuren oder geeigneten Säurederivate), wie z.B. Säurehalogenide, Säureanhydride oder Ester, beinhalten dabei

- Derivate der anorganischer Säuren - wie beispielweise der Schwefelreihe (Schwefelsäure, Schweflige Säure, Thioschwefelsäure und andere), der Phosphorreihe (Phosphorsäure, Phosphonsäure, Phosphorige Säure)-, bevorzugt aber
- Derivate der Carbonsäuren, wie

  ◦ gesättigte Fettsäuren und kürzere Monocarbonsäuren, beispielsweise Ameisensäure, Essigsäure, Propionsäure, Buttersäure, Valeriansäure, Capronsäure, Önanthsäure, Caprylsäure, Pelargonsäure, Caprinsäure, Undecansäure, Laurinsäure, Myristinsäure, Pentadecansäure, Palmitinsäure, Margarinsäure, Stearinsäure, Nonadecansäure, Arachinsäure, Heneicosansäure, Behensäure, Lignocerinsäure, Cerotinsäure, Montansäure, Melissinsäure,
  ◦ ungesättige Fettsäuren, wie beispielsweise Acrylsäure, Methacrylsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Punicinsäure, Elaeostearinsäure, Arachidonsäure, Timnodonsäure, Clupanodonsäure, Cervonsäure,
  ◦ Harzsäuren auf Basis von Diterpenen - zum Beispiel Abietane, Pimarane, Isopimarane, Labdane - oder Triterpenen - zum Beispiel. Dammarane, Tirucallane, Oleanane, Ursane, Lupane -,
  ◦ Hydroxycarbonsäuren, beispielweise. Äpfelsäure, 2-Hydroxy-4-methylmercapto-buttersäure, Glycolsäure, Isozitronensäure, Mandelsäure, Milchsäure, Tartronsäure, Weinsäure, Zitronensäure, $\beta$-Hydroxybuttersäure, Mevalonsäure, Gallussäure, 4-Hydroxybuttersäure, Polyhydroxybuttersäure, Salicylsäure, 4-Hydroxybenzoesäure,
  ◦ Aminosäuren, beispielsweise Alanin, Arginin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin und Valin,

○ Di-, Tri-, und Oligocarbonsäuren, beispielsweise Oxalsäure, Malonsäure, Bernsteinsäure, Glutarsäure, Adipinsäure, Pimelinsäure, Korksäure, Suberinsäure, Azelainsäure, Sebacinsäure, Undecandisäure, Dodecandisäure, Brassylsäure, Tetradecandisäure, Thapsiasäure, Zitronensäure, Aconitsäure, Isocitronensäure, Trimesinsäure, Trimellitsäure, Tartronsäure, Weinsäure, Äpfelsäure, $\alpha$-Ketoglutarsäure, Oxalessigsäure, Phthalsäure, Isophthalsäure, Terephthalsäure, Glutaminsäure, Asparaginsäure, Maleinsäure, Fumarsäure,

○ aromatische Carbonsäuren, wie z.B. Benzoesäure Phthalsäure, Isophthalsäure, Terephthalsäure, Salicylsäure, Fusarinsäure, Gallussäure, Mandelsäure, Phenylessigsäure, Shikimisäure, Benzolsulfonsäure, Sulfanilsäure, Zimtsäure,

wobei diese vorstehende Aufzählung nicht abschließend ist. Besonders bevorzugt aus dieser Gruppe sind die Derivate aromatischer Carbonsäuren.

Als ebenfalls technisch einfach zu realisierenden chemische Modifikation des Sachharidgrüstes stellt die Veretherung ein bevorzugtes Funktionalisierungsverfahren dar. Die bei der Veretherung einer oder mehrerer der am Gerüst befindlichen OH-Gruppen gebildeten Mono-, Di-, Oligo- oder Poylether können so funktionalisiert sein, dass das funktionalisierte Polyol eine oder mehrere Gruppen - beispielsweise Methoxy, Ethoxy, Propoxy, Butoxy, Pentoxy, Hexoxy, Heptoxy, Octoxy, Nonoxy, Decaoxy, Undecaoxy, Dodecaoxy, Tridecaoxy, Tetradecaoxy, Pentadecaoxy, Hexadecaoxy, Hexadecaoxy, Octadecaoxy, Cyclopentaoxy, Cyclohexaoxy, Phenoxy, Benzoxy, p-Methoxybenzoxy, 3,4-Dimethoxbenzoxy, Triphenylmethyloxy, *tert.*-Butoxy, Allyloxy, Allyloxycarbonyloxy, Methoxymethyloxy, Methylthiomethyloxy, (2-Methoxyethoxy)methyloxy, Benzyloxymethyloxy, $\beta$-(Trimethylsilyl)ethoxymethyloxy, Tetrahydropyranyloxy, Methylphenoxy, Trimethylsilyloxy, Triethylsilyloxy, tert.-Butyldimethylsilyloxy, Triisopropylsilyloxy, tert.-Butyldiphenylsilyloxy, Polyetherstukturen wie Polythylenglycole - trägt und/oder Ethergruppen, die von Fluor- und/oder Chlor- und/oder Iodverbindungen abgeleitet sind und sich insgesamt dadurch auszeichnen, dass ihre Polarität anders, bevorzugt aber geringer ist als die der erfindungsgemäß genannten Ester.

Weitere technisch zu realisierenden und vorteilhaften Modifikationen des Saccharidgrundgerüsts sind die Acetal- oder Halbacetalbildung, beispielsweise die Bildung der Benzyliden-, Isopropyliden- und Cyclohexyliden- bzw. Cyclopentyliden-Acetale.

Als Polymerkomponente in den erfindungsgemäßen Haftklebemassen werden lösemittelbasierte Polyacrylate, lösemittelfreie Polyacrylate sowie in Wasser dispergierte Polyacrylate mit einem Feststoffgehalt zwischen 25% und 75%, bevorzugt zwischen 50% und 70% eingesetzt.

Die erfindungsgemäß als Polymerkomponente eingesetzten Polymere haben bevorzugt gewichtsmittlere Molekulargewichte von mehr als 100.000 g/mol, bevorzugt von mehr als 250.000 g/mol. Die gewichtsmittleren Molekulargewichte der eingesetzten Polymere können bis zu einigen zig Millionen g/mol betragen, bevorzugt liegen sie im Bereich von bis zu 8.000.000 g/mol.

Beispiele für vorteilhaft einsetzbare Polymere sind solche mit einer langkettige Polymermode mit einem gewichtsmittleren Molekulargewicht von mindestens 500.000 g/mol und höchstens 3.000.000 g/mol, bevorzugt von mindestens 800.000 g/mol und höchstens 2.000.000 g/mol.

Als Monomere bzw. Monomergemische, die zur Herstellung der erfindungsgemäßen Polymere (co)polymerisiert werden können, kommen alle dem Fachmann bekannten radikalisch oder ionisch polymerisierbaren polymerisierbare Gruppen, bevorzugt C=C-Doppelbindungs-haltige Monomere in Betracht. Besonders bevorzugt werden hierbei $\alpha,\beta$-ungesättigte Carbonsäuren und ihre Derivate der allgemeinen Struktur

$$CH_2=C(R_1)(COOR_2)$$

als Edukte eingesetzt, wobei $R_1$ = H (Acrylsäurederivate) oder $CH_3$ (Methacrylsäurederivate) und $R_2$ = H oder lineare, verzweigte oder ringförmige, gesättigte oder ungesättigte Alkylreste mit 1 bis 30, bevorzugt mit 4 bis 18 Kohlenstoffatomen darstellt, mit oder ohne zusätzliche Substituenten wie Hydroxy-, C1-C6-Alkoxy-, Halogen-, Hydroxyalkyl-, Amino-, Alkylamino-, Acylamino-, Carboxyl-, Alkoxycarbonyl-, Sulfonsäure-, Sulfonsäureester-, Alkylsulfonyl-, Arylsulfonyl-, Sulfonyl-, und Sulfonamidgruppen.

In einer vorteilhaften Ausführung der Erfindung werden Acryl- und Methacrylsäurefreie Polymere eingesetzt. Acryl- und Methacrylsäurefreie Systeme wirken nicht korrosiv auf Halbleitermaterialien wie z.B. ITO-Oberflächen und werden zum Beispiel bevorzugt dort eingesetzt, wo nicht korrosive Systeme gewünscht sind, wie beispielsweise im Bereich der Elektronikindustrie.

Monomere, die sehr bevorzugt im Sinne der vorstehenden Formel $CH_2=C(R_1)(COOR_2)$ eingesetzt werden, umfassen Acryl- und Methacrylsäureester mit Alkylgruppen bestehend aus 4 bis 18 C-Atomen. Spezifische Beispiele für zum Einsatz kommende Verbindungen sind, ohne sich durch diese Aufzählung einschränken zu wollen: Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobomylmethacrylat, t-Butylphenylacrylat, t-Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4, 4,4-Heptafluorobutylacrylat, 2,2,3,3,4,4,4-Heptafluorobutylmethacrylat, 2,2,3,3,4,4,5,5,6,6,7, 7 ,8,8,8-Pentadecafluorooctylmethacrylat, Dimethylaminopropylacrylamid, Dimethylaminopropylmethacrylamid, N-(1-Methylundecyl) acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α-Methylstyrol, o- und p-Methylstyrol, o-Butyistyrol, 4-n-Butylstyrol, 4-n-Decylstyrol, 3,4-Dimethoxystyrol, Makromonomere wie 2-Polystyrolethylmethacrylat (Molekulargewicht Mw von 4.000 bis 13.000 g/mol), Polymethylmethacrylatethylmethacrylat (Mw von 2.000 bis 8.000 g/mol).

Weiterhin können prinzipiell im Sinne der Erfindung alle vinylisch-funktionalisierten Verbindungen eingesetzt werden, die mit den zuvor genannten Monomeren copolymerisierbar sind.

Die Monomere können vorteilhaft auch derart gewählt werden, dass zumindest ein Teil von ihnen funktionelle Gruppen enthält, die eine nachfolgende strahlenchemische Vernetzung (beispielsweise durch Elektronenstrahlen, UV) unterstützen (sogenannte "copolymerisierbare Photoinitiatoren"). Geeignete copolymerisierbare Photoinitiatoren sind z. B. Benzoin(meth)acrylat- und (meth)acrylatfunktionalisierte Benzophenonderivat-Monomere, die eine Vernetzung durch Elektronenbestrahlung unterstützen, beispielsweise Tetrahydrofurfuryl(meth)acrylat, N-tert-Butyl(meth)acrylamid, Allyl(meth)acrylat.

In einer bevorzugten Ausführungsform des erfindungsgemäßen Verfahrens umfasst das Monomergemisch wenigstens einen Acryl- und/oder Methacrylsäureester. Besonders bevorzugt umfasst das Monomergemisch zumindest 70 Gew.-% wenigstens eines Acryl- und/oder Methacrylsäureesters.

Als Initiatoren für die radikalische Polymerisation zur Herstellung der Polymere können alle für Acrylate oder andere Monomere bekannten üblichen Initiatoren eingesetzt werden. Die Produktion von C-zentrierten Radikalen ist in Houben Weyl, Methoden der Organischen Chemie, Vol. E 19a, S. 60-147 beschrieben. Diese Methoden können in Analogie angewendet werden. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid (DPO), Cumolhydroperoxid, Cyclohexanonperoxid, Di-tert-butylperoxid, Azodiisosäurebutyronitril (AIBN), Cyclohexylsulfonylacetylperoxid, Diisopropylpercarbonat, tert-Butylperoctoat, Benzpinacol. In einer sehr bevorzugten Variante werden die Initiatoren in mehreren Stufen hinzu gegeben, so dass der Umsatz auf über 90% gesteigert wird. Der in dem Polymer verbleibende Restmonomergehalt kann so auf unter 10 Gew.-% abgesenkt werden.

Die Polymerisation kann auch als UV-Polymerisation durchgeführt werden, wobei die Polymerisation durch entsprechende Bestrahlung initiiert wird. Hierzu ist es vorteilhaft, der zu polymerisierenden; Monomermischung entsprechende - für Acrylate oder andere Monomere grundsätzlich bekannte - Photoinitiatoren zuzugeben.

Die Initiatoren können vorteilhaft vor oder zu Beginn der Polymerisation zu der Monomerlösung gegeben werden, es kann auch während der Polymerisation mit Initiatoren nachdosiert werden. Ebenfalls ist Zugabe initiatorhaltiger Polymere möglich. Die Initiatoren werden bevorzugt zu einem Anteil von 0,001 bis 1 Gew.-%, bevorzugter von 0,025 bis 0,1 Gew.-%, bezogen auf das Monomerengemisch, in der Reaktionslösung, eingesetzt.

Die zur Initiierung der Polymerisation eingesetzten Initiatoren werden dabei bevorzugt derart gewählt, dass sie eine geringe Tendenz zur Ausbildung von Seitenketten in den Polymeren aufweisen, ihre Pfropfwirksamkeit liegt bevorzugt unter einem Wert von $\varepsilon < 5$ bei der Temperatur des Reaktionsgemisches bei Zugabe des Initiators. Gegen Ende der Polymerisation bietet sich eine Schlussinitiierung mit einem Initiator hoher Pfropfwirksamkeit an, um den Restmonomeranteil nahe an 0% zu bringen oder sogar komplett zu eliminieren.

Als Lösungsmittel können im Zusammenhang mit dieser Erfindung prinzipiell alle dem Fachmann zur Durchführung von Polymerisationen geläufigen Lösungsmittel zur Anwendung kommen. Wasser ist dabei ebenso möglich wie organische Lösungsmittel, insbesondere aliphatische oder aromatische Kohlenwasserstoffe, Ester und Ether. Beispiele für organische Lösungsmittel, die sich gut eignen, sind Aceton, Benzin (Siedegrenzenbenzin), Ethylacetat, Methylethylketon, Toluol, Xylol, Butylacetat. Gemische sind ebenfalls denkbar. Bevorzugt wird das Lösungsmittel(gemisch) so ausgewählt, dass die Polymerisation unter Bedingung der Siedekühlung durchgeführt werden kann und dass die Übertragungskonstante zum Lösemittel so eingestellt wird, dass damit das Molekulargewicht gesteuert wird.

Zur Herstellung der erfindungsgemäßen Haftklebemasse kann man vorteilhaft derart vorgehen, dass die Polymerkomponente und die Saccharidkomponente in einem Lösemittel oder in Substanz gemischt werden, wobei das Mischungsverhältnis zwischen Saccharidkomponente und Polymerkomponente vorteilhaft zwischen 1:20 und 20:1 beträgt

Bedarfsweise können der erfindungsgemäßen Haftklebemasse weitere dem Fachmann bekannte Additive zur Anpassung der Produkteigenschaften zugesetzt werden wie z. B. Klebharze, Vernetzungsmittel, Alterungsschutzmittel, Antioxidantien, Weichharze, Kautschuke, Füllstoffe, Flammschutzmittel, Öle oder Emulgatoren, wobei diese Aufzählung nicht abschließend ist. Mit diesen Additiven gelingt es beispielsweise, bei Verwendung der Haftklebemasse in einem Klebeband die klebtechnischen Eigenschaften in gewünschter Weise zu beeinflussen bzw. eine weitere Eigenschaft in das Klebeband einzuführen.

Vorteilhaft findet eine chemische und/oder eine physikalische Vernetzung der Haftklebemasse statt, insbesondere nachdem diese in die für die Anwendung vorgesehene Form - etwa als Schicht in einem Klebeband - vorliegt.

Zur Vernetzung können alle dem Fachmann bekannten Verfahren und Reagenzien eingesetzt werden. Je nach Verfahren und/oder Reagenz wird dann als zumindest eine Sorte eines zur Vernetzung befähigten (Co)monomers eine solche ausgewählt, die eine entsprechend geeignete Funktionalität trägt. Als Vernetzungsverfahren sind thermische und/oder strahlenchemische Verfahren denkbar, die z.B. über UV oder Elektronenstrahlen initiiert werden. Zur Unterstützung dieser Vernetzungsverfahren können die nach dem Stand der Technik üblichen Hilfsstoffe wie Katalysatoren und/oder Initiatoren eingesetzt werden.

Sehr bevorzugt wird über chemische Vernetzer ein Netzwerk gebildet. Dazu wird der Klebmassenformulierung zumindest eine Sorte eines Vernetzers zugesetzt. Besonders geeignete Vernetzer gemäß dem erfinderischen Verfahren sind multifunktionelle, insbesondere bi-, tri- oder tetrafunktionelle Isocyanate oder multifunktionelle, insbesondere bi-, tri- oder tetrafunktionelle Epoxide. Eingesetzt werden können in sehr günstiger Weise ebenfalls Metallchelat-Verbindungen (z.B.: Aluminiumacetylacetonat). Verwendet werden können aber auch alle weiteren, dem Fachmann geläufigen multifunktionellen, insbesondere bi-, tri- oder tetrafunktionellen Verbindungen, die in der Lage sind, insbesondere Polyacrylate und Saccharidderivate, vorzugsweise aber OH- und COOH-Gruppen tragende Polyacrylate und Saccharidderivate zu vernetzen. Weiterhin können Silane, vor allem Trialkoxyorganosilane, die als Teil ihres organischen Rests optional eine reaktive Funktionalität tragen, zum Einsatz kommen.

Für eine eventuelle UV-Vernetzung ist es vorteilhaft, wenn der zu vernetzenden Haftklebemasse Photoinitiatoren zuzugeben wurden.

Auch Kombinationen aus verschiedenen Vernetzungskonzepten oder Vernetzersubstanzen sind möglich. Entsprechend können die multimodalen, insbesondere bimodalen (Co)polymere auch zwei oder mehr verschiedene Comonomersorten enthalten, die zu einer Vernetzung befähigt sind.

Je nach Anwendungsgebiet und gewünschten Eigenschaften der erfindungsgemäßen Haftklebemasse können dieser weitere Komponenten und/oder Additive zugesetzt sein, und zwar jeweils allein oder in Kombination mit einem oder mehreren anderen Additiven oder Komponenten. Sehr bevorzugt werden diese Additive bzw. Komponenten derart gewählt, dass sie farblos und alterungsstabil sind. Auch färbende Additive sind erfindungsgemäß - wenn gewünscht - denkbar, aber bevorzugt derart zu wählen, dass sie ihre Farbe über die Zeit halten und nicht verfärben. Für hochtransparente Haftklebemassen wird üblicherweise auf eintrübende oder farbige Additive verzichtet.

Je nach Anwendungsgebiet können die Haftklebemassen entsprechend abgemischt sein. So kann die erfindungsgemäße Haftklebemasse beispielsweise pulver- und granulatförmige, insbesondere auch abrasive und verstärkende, Füllstoffe, Farbstoffe und Pigmente wie z. B. Kreiden ($CaCO_3$), Titandioxid, Zinkoxide und/oder Ruße, enthalten. Darüber hinaus können verschiedene organische Füllstoffe enthalten sein.

Geeignete Additive für die erfindungsgemäße Haftklebemasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin kann die erfindungsgemäße Haftklebemasse Flammschutzmittel, schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive, beispielsweise Eisen-(III)-Oxide; organische, nachwachsende Rohstoffe wie beispielsweise Holzmehl, organische und/oder anorganische Nanopartikel, Fasern; Compoundierungsmittel, Alterungsschutzmittel, Antioxidantien, Lichtschutzmittel, UV-Schutzmittel und/oder Ozonschutzmittel, Öle, Emulgatoren und dergleichen enthalten.

Optional können Weichmacher enthalten sein. Als Weichmacher können z.B. (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Bevorzugt liegt die Haftklebemasse in den erfindungsgemäßen Haftklebeprodukten in Form einer Schicht vor. Die Beschichtung er Haftklebemasse kann grundsätzlich aus Lösung oder lösemittelfrei, insbesondere aus der Schmelze, erfolgen.

Die Schichtdicke der Haftklebemasse in diesen Produkten ist keiner besonderen Beschränkung unterworfen. In einer besonderen Ausführungsform umfasst diese Erfindung haftklebrige Produkte, deren Haftklebemasse eine Schichtdicke von mindestens 5 $\mu$m, bevorzugt mindestens 30 $\mu$m, noch bevorzugter mindestens 100 $\mu$m aufweist. Überraschenderweise wurde gefunden, dass die haftklebrigen Produkte trotz großer Schichtdicken in sehr hoher optischer Qualität im Hinblick auf Beschichtungsbild, Blasenfreiheit und Freiheit von Verlaufsspuren herstellbar sind und dass die insbesondere farblos, transparent, und alterungsstabil sind.

Die schichtförmige Haftklebemasse kann insbesondere Teil eines Haftklebebandes sein, das eine oder mehrere Schichten dieser Haftklebemasse aufweist. In einer ersten Variante besteht das Haftklebeband lediglich aus der Haftklebemassenschicht (sogenanntes "Transferklebeband"); gegebenenfalls kann dieses zur besseren Handhabbarkeit und Aufwickelbarkeit auf einer Seite oder beiden Seiten mit einem temporären Abdeckmaterial (sogenannter "Liner") versehen sein, dass zur Anwendung wieder entfernt wird. In einer zweiten Variante besteht das Haftklebeband aus zumindest einer Schicht der erfindungsgemäßen Haftklebemasse und einem Trägermaterial (einseitiges Klebeband), wobei die Haftklebemassenschicht wiederum temporär abgedeckt sein kann. In einer dritten variante liegt zumindest eine erfindungsgemäße Haftklebemassenschicht, eine innere Schicht - insbesondere eine Trägerschicht - sowie eine zweite äußere Klebemassenschicht - insbesondere Haftklebemassenschicht - vor, die zur ersten erfindungsgemäßen Haftklebemassenschicht identisch oder unterschiedlich sein kann (doppelseitiges Klebeband). Das doppelseitige Klebeband kann auf einer oder beiden Klebemassenseiten temporär abgedeckt sein.

Das einseitige und das doppelseitige Klebeband können in weiteren Ausgestaltungen weitere, zusätzliche Schichten als die bereits genannten aufweisen.

Falls ein Trägermaterial eingesetzt wird kommen die dem Fachmann bekannten Materialien wie beispielweise Folien, Papier, Gelege, Vliese und/oder Gewebe zu Einsatz, auf das einseitig oder beidseitig die Beschichtung aufgebracht wird. Bevorzugt im Sinne der Erfindung kommen transparente Trägermaterialien mit Haze-Werten <5%, besonders bevorzugt aber <3%, mit Transmissionswerten > 95%, besonders bevorzugt aber > 97%, und besonders bevorzugt Träger mit geringer relativer Farbigkeit, bevorzugt L* $\geq$ 99 , |a*| < 1 und |b*| < 1 zum Einsatz. Ohne sich durch die nachstehende Auswahl unnötig beschränken zu wollen, sind Trägermaterialien wie z.B. Polyethylen, Polypropylen, Polycarbonat, Polyacrylat, Polymethacrylat, Polyester oder Glas im Sinne der Erfindung besonders gut als transparente, farblose Trägermaterialien geeignet. Weiterhin sind transparente leitfähigmodifizierte Polymere - wie zum Beispiel leitfähiges transparentes Polyethylenterephthalat (PET) - sowie transparente Leiter- und Halbleitermaterialien - wie zum Beispiel Indiumzinnoxyd (ITO) - geeignet.

Im Falle der Folien werden insbesondere die dem Fachmann bekannten Folien verwendet, bevorzugt Polyethylen, Polypropylen, Polyvinylchlorid und andere für die Anwendung üblichen Polymere und Copolymere, die sowohl einschichtig als auch mehrschichtig eingesetzt werden können. Bei mehrschichtigen Systemen kann können die Zusammensetzung und die Dicke der einzelnen Schichten variieren.

Monoaxial und biaxial gereckte Polypropylene werden häufig für Anwendungen eingesetzt, bei denen eine definierte Reißfestigkeit von nicht unerheblicher Bedeutung ist.

Monoaxial gereckte Polypropylene zeigen eine besonders gute Reißfestigkeit und geringe Dehnung in Längsrichtung. Zur Erzielung gleichmäßiger Festigkeitswerte in Längs- und Querrichtung müssen Folien biaxial gereckt werden.

Sowohl mono- als auch biaxial gereckte Polypropylene und Polyethylene sind als Trägermaterial für die Erfindung besonders geeignet. Die Reckverhältnisse orientieren sich dabei an den entsprechenden Anforderungen.

Es können sowohl Blas-, als auch Flachfolie eingesetzt werden.

Um eine ausreichende Haftung der Klebemasse auf dem Trägermaterial sicherzustellen, sollte die Oberflächenenergie der zu beschichtenden Seite innerhalb eines definierten Bereiches liegen. Dieses kann entweder über eine zusätzliche Beschichtung mit einem Primer gewährleistet werden, oder über eine Oberflächenbehandlung. Bevorzugt wird eine Corona- oder Flammenvorbehandlung, mit der die gewünschten Oberflächenenergien erreicht werden können. Die Oberflächenenergien sollten in einem Bereich von 25 bis 50mN/m, bevorzugt 30 bis 45 mN/m liegen.

Zur Vernesserung der Verankerung der Haftklebemassen auf dem Trägermaterial kann dieses ein- oder beidseitig corona-vorbehandelt sein.

Des Weiteren kann die klebende Beschichtung auf einem Releasematerial aufgetragen sein, wenn die Klebmassenschicht, insbesondere nach Vernetzung, als trägerloses doppelseitig klebendes Selbstklebeband eingesetzt werden soll. Auf der Streichseite können die Oberflächen der Träger chemisch oder physikalisch vorbehandelt sein, sowie die Rückseite derselben einer antiadhäsiven physikalischen Behandlung oder Beschichtung unterzogen sein. Schließlich kann das bahnförmige Trägermaterial ein beidseitig antiadhäsiv beschichtetes Material sein wie ein Trennpapier oder eine Trennfolie, auch Liner genannt.

Der Masseauftrag der Klebemasse auf dem bahnförmigen Trägermaterial kann vorteilhaft zwischen 1 und 1000

g/m$^2$, vorzugsweise zwischen 10 und 300 g/m$^2$ betragen, besonders bevorzugt 100-150 g/m$^2$ betragen.

## Anwendungsgebiete

Die Einsatzbreite für die erfindungsgemäß beanspruchten ein- und doppelseitigen saccharidmodifizierten Haftklebeprodukte sind groß. Der Focus liegt dabei auf der Anwendung in sichtbaren Verklebungen wie z.B. in Optik- und Elektronikanwendungen oder in der Bauindustrie, beispielsweise bei Fassadenverklebungen. Bevorzugt kommen die wesentlichen Gestaltungsformen (umfassend doppelseitige einschichtige trägerlose Transferklebestreifen, mit einer oder zwei antiadhäsiv beschichteten Außenlagen (Releaselinern), doppelseitige zwei- oder mehrschichtige Klebestreifen mit einem ein- oder mehrschichtigen Träger und mit einer oder zwei antiadhäsiv beschichteten Außenlagen (Releaselinern) sowie einseitig haftklebrige Klebestreifen mit einem ein- oder mehrschichtigen Träger und mit einer antiadhäsiv beschichteten Außenlage (Releaselinern)) für die Anwendung in Anzeigetafelverklebungen (Displayverklebungen), Berührungssensoren/tafeln (Touchsensoren), Deckglasverklebungen (Coverglas-) oder Oberflächenschutzstreifen zum Einsatz, wobei diese Aufzählung nicht abschließend ist.

Die Erfindung betrifft somit weiterhin insbesondere die Verwendung einer solchen Haftklebemasse, insbesondere in Form eines zumindest eine Schicht dieser Haftklebemasse umfassenden Haftklebebandes - wie sie im vorstehenden Teil dieser Schrift in einer ihrer Ausgestaltungen dargestellt ist, in der Elektronikindustrie und/oder zur Verklebung zweier Substrate miteinander zu einem Verbund, wobei der Verbund Bestandteil eines optischen, elektronischen und/oder feinmechanischen Geräts ist, insbesondere eines transportablen optischen, elektronischen oder feinmechanischen Geräts.

Von Vorteil ist die Verwendung der erfindungsgemäßen Haftklebemasse, wenn zumindest eines der Substrate durchsichtig oder durchscheinend ist - wie beispielweise Glas oder Kunststoffe, wie Plexiglas -; und insbesondere dann, wenn das durchsichtige bzw. durchscheinende Substrat ein Fenster oder eine Linse zum Zwecke des Schutzes darunter angeordneter Komponenten und/oder zur Bewirkung physiko-optischer Effekte für die Funktion des optischen, elektronischen oder feinmechanischen Geräts ist.

Dabei kann das - insbesondere transportable - optische, elektronische oder feinmechanische Gerät beispielweise gewählt sein aus der Gruppe umfassend:

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras, Digicams, Fernsichtgeräte, Nachtsichtgeräte
- Computer, Laptops, Notebooks, Netbooks, Ultrabooks, Tablet-Computer, Geräte mit berührungsempfindlichen Bildschirmen ("Touchscreen-Geräte"), Handhelds, elektronische Terminkalender und Organisatoren (sogenannte "Electronic Organizer" oder "Personal Digital Assistants", PDA), Schreibmaschinen, Modems, Computer-Zubehörgeräte, wie Mäuse, Zeichenpads, Mikrophone, Lautsprecher
- Lesegeräte für elektronische Bücher ("e-Books"),
- Fernseher (auch Mini-Fernsehgeräte), Filmabspielgeräte, Videoabspielgeräte, Monitore, Bildschirme, Displays, Beamer
- Radios, Walkmen, Musikabspielgeräte (z.B. CD, DVD, Blueray, Kassetten, USB, MP3-Player), Kopfhörer
- Drucker, Faxgeräte, Kopiergeräte,
- Telefone, Mobiltelefone, Smartphones, Funksprechgeräte, Freisprechgeräte
- Defibrilatoren, Blutzuckermessgeräte, Blutdruckmessgeräte
- Akkumulatorladegeräte, Messgeräte, Multimeter, Lampen, wie Taschenlampen, Laserpointer etc
- Detektoren, optische Vergrößerungsgeräte, Taschenrechner
- Fernsteuerungen, Fernbedienungen, Spielkonsolen
- GPS-Geräte, Navigationsgeräte
- Personenrufgeräte (Pager, Pieper)
- Datenspeichergeräte (USB-Sticks, externe Festplatten, Speicherkarten)
- Armbanduhren, Taschenuhren, Kettenuhren.

## *Liste der Abkürzungen*

a* - grün-rot-Wert

AIBN - Azodiisosäurebutyronitril

b* - gelb-blau-Wert

c - Konzentration

d - Schichtdicke des Materials

DACP - Diacetone Alcohol Cloud Point

$E_\lambda$ - Extinktion

$\varepsilon_\lambda$ - Extinktionskoeffizienten

Fa. - Firma

H - Haze (Großwinkelstreuung)

$I_0$ - Anfangsintensität

I - Intensität nach Durchdringung der Probe

L* - Helligkeitswert,

$\lambda$ - Wellenlänge

MMAP - Mixed Methylcyclohexane Aniline Point

n - Brechungsindex

$T_{R\&B}$ - Ring und Kugel Erweichungspunkt (Herzog)

T - Transparenz

$\tau_\lambda$ - Transmission

***Prüfmethoden, Definitionen von Parameterangaben***

***Testmethode A - GPC:***

Die Bestimmung der Molekulargewichtsverteilung und damit zusammenhängend das Zahlenmittel der Molekulargewichtsverteilung $M_n$, das Gewichtsmittel der Molekulargewichtsverteilung $M_w$ und das Maximum bei monomodalen bzw. die Maxima der Molekulargewichtsverteilung bei bi- oder multimodalen Copolymeren $M_P$ erfolgte durch Gelpermeationschromatographie (GPC). Als Eluent wurde THF mit 0,1 Vol.-% Trifluoressigsäure eingesetzt. Die Messung erfolgte bei 23°C. Als Vorsäule wurde PSS SDV, 10 $\mu$, $10^3$ Å, ID 8.0 mm $\times$ 50 mm verwendet. Zur Auftrennung wurde die Säulenkombination PSS-SDV, 10 $\mu$, Linear-one mit ID 8.0 mm $\times$ 300 mm eingesetzt. Die Probenkonzentration betrug 1 g/l, die Durchflussmenge 0,5 ml pro Minute. Es wurde gegen Polystyrol-Standards gemessen. MP-Werte wurden graphisch aus den Elugrammen ermittelt. Zur Datenverarbeitung wurde die Software WinGPC Unity Version 7.20 der Fa. PSS verwendet.

***Testmethode B - Klebkraft:***

Zur Bestimmung der Klebkraft (Schälfestigkeit) wird in Anlehnung an PSTC-1 wie folgt vorgegangen: Auf eine 25 $\mu$m dicke PET-Folie wird eine 50 $\mu$m dicke Haftklebeschicht aufgebracht. Ein 2 cm breiter Streifen dieses Musters wird auf eine saubere, geschliffene Stahlplatte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Ergebnisse werden in N/cm angegeben.

***Testmethode C - Mikroscherweg:***

In Anlehnung an ASTM D 4498 wird wie folgt vorgegangen: Ein 50 $\mu$m dickes Muster eines Transferklebebands wird von den Trennlinern befreit und einseitig mit einer 50 $\mu$m dicken Aluminiumfolie zur Stabilisierung ausgerüstet. Ein Prüfstreifen von 10 mm Breite und ca. 50 mm Länge wird so auf eine saubere Stahlplatte geklebt, dass eine Verklebungsfläche von 130 mm$^2$ resultiert. Die Verklebung wird durch dreimaliges Hin- und Herrollen eines 2 kg Gewichts erzeugt. Die Stahlplatte wird in der Messapparatur justiert, so dass der Prüfstreifen in vertikaler Position vorliegt und auf 30°C temperiert. Das System wird auf 40°C aufgeheizt. Mittels einer Schelle (6,4 g Eigengewicht) wird am freien Ende des Teststreifens ein Gewicht von 500 g befestigt, das die Probe durch Gravitation scherend belastet. Auf ein kurzes über die Stahlplatte überstehendes Stück des Testklebestreifens wird ein Mikrometertaster aufgelegt, der die Auslenkung in Abhängigkeit der Messzeit registriert. Ergebnis für den Mikroscherweg ist der nach einer Messzeit von 60 min registrierte Wert. Zudem wird die Elastizität aufgenommen, indem nach der Scherbeanspruchung das Gewicht abgehängt wird und die Relaxation des Klebestreifens verfolgt wird. Nach weiteren 60 min wird der Wert des Mikrometertasters aufgenommen und in das prozentuale Verhältnis mit dem Mikroscherweg unter Belastung gesetzt. Ein hoher Prozentwert indiziert eine hohe Elastizität entsprechend einem hohen Rückstellvermögen der Probe.

***Testmethode D - Farbwert (L*, a*, b*):***

Es wurde gemäß DIN 6174 vorgegangen und die Farbcharakteristik im dreidimensionalen Raum, aufgespannt durch die drei Farbparameter L*, a* und b*, nach CIELab untersucht. Dazu wurde ein BYK Gardener spectro-guide Messgerät verwendet, ausgestattet mit einer D/65° Lampe. Innerhalb des CIELab-Systems gibt L* den Grauwert, a* die Farbachse von grün nach rot und b* die Farbachse von blau nach gelb an. Der positive Wertebereich für b* gibt die Intensität des gelben Farbanteil an. Als Referenz diente eine weiße Keramikfliese mit einem b* von 1,05. Diese Fliese diente zudem als Probenhalter, auf den die zu prüfende Klebschicht auflaminiert wird. Die Farbmessung erfolgt an der jeweiligen reinen Klebschicht, nachdem diese von den Trennlinern befreit worden ist.

### Testmethode E - Haze (Großwinkelstreuung), Transmission:

Die Bestimmung von Transmission und Haze erfolgte nach ASTM D1003 an einem hazegard plus der Firma Byk-Gardner. Hierzu wurde gemäß ASTM D1003 vorgegangen, wobei zunächst Muster der doppelseitigen haftklebrigen Produkte von den Trennlinern befreit und auf die Musterhalterung appliziert wurden.

### Testmethode F - Brechungsindex:

Der Brechungsindex n wurde mit dem Optronic Meßgerät der Fa. Krüss bei 25°C und weißem Licht ($\lambda$ = 550 nm $\pm$ 150 nm) nach dem Abbeschen Prinzip gemessen. Zur Temperaturstabilisierung wurde das Gerät in Verbindung mit einem Thermostaten der Fa. Lauda betrieben. Zur Herstellung der Haftklebeschichtmuster wurde Klebemasse auf einen Trennliner beschichtet, getrocknet und mit einem zweiten Trennliner abgedeckt. Zur Messung wurden beide Trennliner ausgedeckt. Zur Herstellung der Trägerschichtmuster wurde die Ausgangsformulierung auf einen Trennliner beschichtet und getrocknet. Zur Messung wurde der Trennliner ausgedeckt. Im Falle der als Folie vorliegenden Trägerschichtmuster wurde ein Abschnitt dieses Materials ohne weitere Vorbehandlung vermessen. Die Messungen wurden an jeder Probe dreimal durchgeführt; die erhaltenen Werte wurden gemittelt.

### Testmethode G - MMAP

Der Mixed Methylcyclohexane Aniline Point (MMAP) einer Testsubstanz (Harz) als Maß für dessen aliphatischen bzw. aromatischen Charakter (Löslichkeit) wird entsprechend der internen Methode "H90-5" der Firma Hercules bestimmt. Es werden 10,00 $\pm$ 0,01 g Testsubstanz bei erhöhter Temperatur in einem Gemisch aus genau 10,0 ml Methylcyclohexan (wasserfrei, Siedepunkt = 101°C, Dichte (23°C) = 0,77 g/cm$^3$, von z. B. Aldrich # 30.030-6 mit einem Anilinpunk von 39,9 +- 0,1 °C) und genau 5.0 ml Anilin (Brechungsindex (20°C) = 1,5863, Siedepunkt = 184°C, Dichte (23°C) = 1,02 g/cm$^3$, von z. B. Aldrich # H 4,154-4) zugefügt. Im Gerät Chemotronic Cool - Automatic Turbidity Analyzer -50°C - +250°C von novo matics wird die heiße Probe unter Rühren mit 1 K/min abgekühlt. Die Temperatur, bei der das Harz unlöslich wird und eine Trübung von 75% erreicht ist wird als Mixed Methylcyclohexane Aniline Point angegeben.

### Testmethode H - DACP

Der Diacetone Alcohol Cloud Point (DACP) als Maß für die Polarität (Löslichkeit) einer Testsubstanz (Harz) wird entsprechend der internen Methodede "H90-4a" der Firma Hercules bestimmt. Es werden 5,00 $\pm$ 0,01 g Testsub-stanz bei erhöhter Temperatur in genau 5,0 g (ca. 5,8 ml) Xylol (Isomerengemisch, nD20 = 1,4970, Siedepunkt = 137-144°C, Dichte (23°C) = 0,860 g/cm$^3$, von z. B. Aldrich # 32,057-9) gelöst. Wenn das Harz gelöst ist, lässt man die Lösung auf ca. 80°C abkühlen und ergänzt die verdampfte Xylolmenge. Danach wird genau 5.0 g (ca. 5,37 ml) Diacetonalkohol (4-Hydroxy-4-methyl-2-pentanon, 99% (GC), Siedepunkt = 166°C, Dichte (23°C) = 0,931 g/cm$^3$, von z. B. Aldrich # H 4,154-4) zugefügt. Im Gerät Chemotronic Cool - Automatic Turbidity Analyzer -50°C - +250°C von novo matics wird Die heiße Probe unter Rühren mit 1 K/min abgekühlt. Die Temperatur, bei der das Harz unlöslich wird und eine Trübung von 75% erreicht ist wird als Diaceton Alcohol Cloud Point angegeben.

### Testmethode J - UV-Vis

Die Absorption im UV-Wellenlängenbereich wurde mittels eines UV-Spektrometers des Typs UV/VIS Spectrometer Specord 250plus (Analytik Jena) bestimmt.

### Erweichungspunkt-Bestimmung (Herzog)

Erweichungspunkte ($T_{R\&B}$) wurden entsprechend ASTM-Norm D36/D36M mit dem Gerät Softening Point Tester Ring and Ball HRB 754 der Firma herzog bestimmt. Zur Doppelbestimmung wurden zwei Proben gleichzeitig vorbereitet und geprüft. Die Ringe wurden bei erhöhter Temperatur mit erweichtem Harz befüllt und wieder auf Raumtemperatur abgekühlt. Bei der Ermittlung dieses Wertes wurde je eine Stahlkugel (Durchmesser = 9,8 mm, Gewicht = 3,5 g) auf die in einem Ring angebrachte Probenschicht gelegt. Im Laufe des Versuches wird das Material gleichmäßig (5 K/min) im Glyzerinbad erwärmt. Wenn die Probe sich um 25,4±0,2 Millimeter nach unten durchgebogen hat (Detektion via Lichtschranke), wurde die entsprechende Temperatur festgehalten.

### Glasübergangspunktsbestimmung

Die Bestimmung der statischen Glasübergangstemperatur erfolgt über Dynamische Differenzkalorimetrie nach DIN 53765. Die Angaben zur Glasübergangstemperatur TG beziehen sich auf den Glasumwandlungstemperatur-Wert Tg nach DIN 53765:1994-03, sofern im Einzelfall nichts anderes angegeben ist.

### Experimente

Kommerziell erhältliche, eingesetzte Chemikalien

| Chemische Verbindung | Handelsname | Hersteller | CAS-Nr. |
|---|---|---|---|
| Bis-(4-tert-butylcyclohexyl)-peroxyd icarbonat | Perkadox® 16 | Akzo Nobel | 15520-11-3 |
| 2,2'-Azobis(2-methylpropio-nitril), AIBN | Vazo® 64 | DuPont | 78-67-1 |
| Bisphenol-A-diglycidylether | BFDGE | Sigma-Aldrich | 1675-54-3 |
| Aliphatisches Polyisocyanatpolymer (Lösung) | Desmodur N75 | Bayer Material-Science AG | 11132-83-5 |
| Aromatisches Polyisocyanat auf Basis von Toluendiisocyanat | Desmodur L75 | Bayer Material-Science AG | 9081-90-7 |
| Aluminium-(III)-acetylacetonat | | Sigma-Aldrich | 13963-57-0 |
| Zink-(II)-chlorid | | Sigma-Aldrich | 7646-85-7 |
| Saccharoseoctabenzoat | | Sigma-Aldrich | 12738-64-6 |
| $\alpha$-D-Glucopyranosepentabenzoat | | Sigma-Aldrich | 22415-91-4 |
| $\beta$-D-(+)-Glucosepentaacetat | | Sigma-Aldrich | 604-69-3 |
| Saccharoseoctaacetat | | Sigma-Aldrich | 126-14-7 |
| Terpenphenolharz | Dertophene T 110 | DRT | 25359-84-6 |
| Aromatisches Kohlenwasserstoffharz | Kristalex F85 | Eastman Chemical | 9011-11-4 |
| Acrylatharz | Paraloid DM-55 | DOW | |
| Hydriertes Kolophoniumharz | Pinecrystal KE-311 | Arakawa Chemical Industries, Ltd. | |
| Terpenpphenolstyrolharz | Sylvares 520 | Arizona Chemical Company LLC | |
| Hydriertes Polyterpenharz | Clearon P105 | Yasuhara Chemical | 106168-39-2 |
| UV-Schutzmittel | Tinuvin 571 0,50% | | |
| Antioxidationsmittel | Weston 399 0,50% | | |
| Antioxidationsmittel | Irganox 3052 0,50% | | |
| Pentaerythrittetraglycidether | Polypox® R16 | UPPC AG | 3126-63-4 |
| 6-Phenyl-1,3,5-triazin-2,4-diyldiamin | Benzoguanamin | AlzChem | 91-76-9 |
| Titandioxid | Ti-Pure-R-105 | Chemorus | 13463-67-7 |

(fortgesetzt)

| Chemische Verbindung | Handelsname | Hersteller | CAS-Nr. |
|---|---|---|---|
| 3-Aminomethyl-3,5,5-trimethylcyclohexylamin | Isophorondiamin | Möller Chemie | 2855-13-2 |

### Bereitstellung Acrylatpolymer A

In einem für die radikalische Polymerisation geeigneten 2l-Stahlreaktor wird unter Stickstoffatmosphäre ein Monomergemisch bestehend aus 7 w-% Acrylsäure, 25% Methylacrylat und 68 w-% 2-Ethylhexylacrylat vorgelegt und mit 233 w-% Ethylacetat/Aceton (96:4), bezogen auf 100 w-% Monomeranteil, versehen. Der Reaktor wird auf 60°C Innentemperatur aufgeheizt und das Monomergemisch wird unter Stickstoff mit insgesamt 0,25 w-% AIBN, bezogen auf 100 w-% Monomeranteil, in mehreren Schritten initiiert. Fünf und sieben Stunden später wird mit jeweils 0,15 w-% Perkadox 16 nachinitiiert. Nach insgesamt 21 Stunden wird die Reaktionsmischung abgekühlt und die wasserklare Polymerlösung mit 32 w-% Feststoffanteil von A abgelassen. Eine Probe des Produkts wird im Vakuum vom Lösungsmittel befreit. Die GPC-Analyse (Testmethode A) von Polymer A ergab eine Molekulargewichtsverteilung mit Mw = 657.000 g/mol und eine Polydispersität von 8,2, einen K-Wert von 51. Der Tg lag bei -37°C.

### Bereitstellung Acrylatpolymer B

In einem für die radikalische Polymerisation geeigneten 2l-Stahlreaktor wird unter Stickstoffatmosphäre ein Monomergemisch bestehend aus 20 w-% 2-Hydroxyethyacrylat, 40 w-% n-Butylacrylat und 40 w-% 2-Ethylhexylacrylat vorgelegt und mit 150 w-% Lösemittel (Ethylacetat/Toluol in Verhältnis 70:30), bezogen auf 100 w-% Monomeranteil, versehen. Der Reaktor wird auf 58°C Innentemperatur aufgeheizt und das Monomergemisch wird unter Stickstoff mit insgesamt 0,25 w-% AIBN, bezogen auf 100 w-% Monomeranteil, in mehreren Schritten initiiert. Im Verlauf der Reaktion wird das Reaktionsgemisch bis auf 65°C erhizt. Fünf und sieben Stunden nach Start wird mit jeweils 0,15 w-% Perkadox 16 nachinitiiert. Nach 21 Stunden wird die Reaktionsmischung abgekühlt und die wasserklare Polymerlösung B mit 27 w-% Feststoffanteil abgelassen. Eine Probe des Produkts wird im Vakuum vom Lösungsmittel befreit. Die GPC-Analyse von B ergab eine Molekulargewichtsverteilung mit Mw = 1.050.000 g/mol, eine Polydispersität von 18,3, einen K-Wert von 73. Der Tg lag bei -47°C.

### Bereitstellung Acrylatpolymer C

In einem für die radikalische Polymerisation geeigneten 2l-Stahlreaktor wird unter Stickstoffatmosphäre ein Monomergemisch bestehend aus 1 w-% Acrylsäure, 2 w-% Glycidlymethacrylat, 30 w-% n-Butylacrylat und 67 w-% 2-Ethylhexylacrylat vorgelegt und mit 67 w-% Lösemittel (Aceton/Isopropanol, 94:6), bezogen auf 100 w-% Monomeranteil, versehen. Der Reaktor wird auf 58°C Innentemperatur aufgeheizt und das Monomergemisch wird unter Stickstoff mit insgesamt 0,25 w-% AIBN, bezogen auf 100 w-% Monomeranteil, in mehreren Schritten initiiert und später auf 65°C temperiert. Fünf und sieben Stunden später wird mit jeweils 0,15 w-% Perkadox 16 nachinitiiert, außerdem wird mehrmals nach Bedarf mit Lösemittel verdünnt. Nach 21 Stunden wird die Reaktionsmischung abgekühlt und die wasserklare Polymerlösung C mit 30 w-% Feststoffanteil an C abgelassen. Eine Probe des Produkts wird im Vakuum vom Lösungsmittel befreit. Die GPC-Analyse von C ergab eine Molekulargewichtsverteilung mit Mw = 1.115.000 g/mol, einem K-Wert von 89 und einen Tg von -51 °C.

### Bereitstellung Acrylatpolymer D

In einem für die radikalische Polymerisation geeigneten Stahlreaktor wird unter Stickstoffatmosphäre 100 kg Monomergemisch bestehend aus 5 w-% Acrylsäure, 30 w-% 2-Ethylhexylacrylat und 67% n-Butylacrylat vorgelegt und mit 66 w-% Aceton/Isopropanol (95:5), bezogen auf 100 w-% Monomeranteil, versehen. Der Reaktor wird auf 60°C Innentemperatur aufgeheizt und das Monomergemisch wird unter Stickstoff in mehreren Schritten mit in Summe 0,1 w-% AIBN, bezogen auf 100 w-% Monomeranteil initiiert. Nach fünf sowie nach sieben Stunden wurde jeweils mit 0,15 % Perkadox 16 nachinitiiert. Nach 21 Stunden wird die Reaktionsmischung abgekühlt und die wasserklare Polymerlösung D mit 44 w-% Feststoffanteil an D abgelassen. Eine Probe des Produkts D wird im Vakuum vom Lösungsmittel befreit. Die GPC-Analyse von Polymer D ergab eine Molekulargewichtsverteilung mit Mw = 974.000 g/mol, einer Polydispersität von 12, einen K-Wert von 70 und einem Tg von -45°C.

**Bereitstellung Acrylatpolymer E**

In einem für die radikalische Polymerisation geeigneten 2I-Stahlreaktor wird unter Stickstoffatmosphäre ein Monomergemisch bestehend aus 10 w-% Acrylsäure und 90% 2-Hydroxyethylacrylat vorgelegt und mit 60 w-% Lösemittel (Aceton/Isopropanol, 94:6), bezogen auf 100 w-% Monomeranteil, versehen. Der Reaktor wird auf 58°C Innentemperatur aufgeheizt und das Monomergemisch wird unter Stickstoff mit insgesamt 0,25 w-% AIBN, bezogen auf 100 w-% Monomeranteil, in mehreren Schritten initiiert. Während der Reaktion wird das Gemisch bis auf 65°C erhitzt. Es wird nach Bedarf verdünnt und fünf bzw. sieben Stunden nach Start mit jeweils 0,15 w-% Perkadox 16 nachinitiiert. Nach 21 Stunden wird die Reaktionsmischung abgekühlt und die wasserklare Polymerlösung mit einem Feststoffanteil an E von 33 w-% abgelassen. Eine Probe des Produkts E wird im Vakuum vom Lösungsmittel befreit. Die GPC-Analyse ergab eine Molekulargewichtsverteilung mit Mw = 1.210.000 g/mol, einen K-Wert von 87 und einen Tg von -48°C.

**Beispiel 1: - Klebmasse K(A)**

In einem dafür geeigneten Glasgefäß werden 250 g Polyacrylatlösung A einem Feststoffanteil von 32 w-% zusammen mit 20 w-%, bezogen auf Gesamtfeststoffgehalt, Saccharoseoctabenzoat (Sigma-Aldrich) zusammen mit 40 g Butanon gelöst. Die so erhaltene Lösemittelhaftklebemasse K(A) wird mit 0,07 w-% BFDGE, bezogen auf Feststoff an A, vernetzt, mittels Rakel auf eine 50 μm dicke silikonisierte Polyesterfolie ausgestrichen und im Trockenschrank getrocknet. Die Schichtdicke der erhaltenen Haftklebeschicht lag bei 100 μm. Sie wird mit einer Lage eines 36 μm dicken silikonisierten Polyesterliners eingedeckt. Es wurde so eine Transferklebefolie erhalten.

Entsprechend dimensionierte Streifen werden Testmethode B und C unterworfen. Es ergaben sich eine Klebkraft (Stahl) von 8,4 N/cm, eine Klebkraft (Glas) von 4,7 N/cm, eine Klebkraft (PE) von 1,1 N/cm, ein maximaler Mikroscherweg von 90 μm und ein elastischer Anteil von 62%.

Eine Farbmessung nach Testmethode D (Muster der Haftklebeschicht 100 μm Dicke, Dimensionen 5 cm × 5 cm) ergab einen L*-Wert von 99,9, einen a*-Wert von -0,03, einen b*-Wert von 0,12 und eine Haze-Messung nach Testmethode E ergab einen Haze-Wert von 0,1 %. Von den Mustern ging kein signifikanter Geruch aus. Nach vier Wochen Feuchtwärmelagerung (85 °C, 85 % relative Luftfeuchte) wurde einen b*-Wert von 0,8 und eine Haze-Wert von 0,1 % festgestellt. Nach einer Woche unter UV-Bestrahlung wurde einen b*-Wert von 0,7 und eine Haze-Wert von 0,1 % festgestellt.

**Beispiel 2: - Klebmasse K(B)**

In einem dafür geeigneten Glasgefäß werden 259,3 g Polyacrylatlösung B mit einem Feststoffanteil von 27 w-% zusammen mit, bezogen auf Gesamtfeststoffgehalt, 10 w-% Saccharoseoctabenzoat, 10 w-% Saccharoseoctaacetat und 10 w-% Glucosepentabenzoat gelöst. Die so erhaltene Haftklebeformulierung wird mit 0,6% Desmodur N75, bezogen auf den Polymeranteil, welches in 10,7 g Toluol gelöst ist, vernetzt, mittels Rakel auf eine 50 μm dicke silikonisierte Polyesterfolie ausgestrichen und im Trockenschrank getrocknet. Die Schichtdicke der Haftklebeschicht von K(B) lag bei 100 μm. Sie wird mit einer Lage eines 36 μm dicken silikonisierten Polyesterliners eingedeckt.

Es wurde so eine Transferklebefolie erhalten. Entsprechend dimensionierte Streifen werden Testmethode B und C unterworfen. Es ergaben sich eine Klebkraft (Stahl) von 7,5 N/cm, eine Klebkraft (Glas) von 5,3 N/cm, eine Klebkraft (PMMA) von 6,4 N/cm, eine Klebkraft (PE) von 1,2 N/cm, ein maximalen Mikroscherweg von 120 μm und einen elastischen Anteil von 82%. Die Scherstandzeit lag bei >10000 Minuten.

Eine Farbmessung nach Testmethode D (Muster der Haftklebeschicht 100 μm Dicke, Dimensionen 5 cm × 5 cm) ergab einen L*-Wert von 99,6, einen a*-Wert von -0,04, einen b*-Wert von 0,2 und eine Haze-Messung nach Testmethode E ergab einen Haze-Wert von 0,2 %. Von den Mustern ging kein Geruch aus. Nach 4 Wochen Feuchtwärmelagerung (85 °C, 85 % relative Luftfeuchte) wurde einen b*-Wert von 0,3 und eine Haze-Wert von 0,2 % festgestellt. Nach 1 Woche unter UV-Bestrahlung wurde einen b*-Wert von 0,9 und eine Haze-Wert von 0,2 % festgestellt.

**Beispiel 3: - Klebmasse K(C)**

In einem dafür geeigneten Glasgefäß werden 216,7 g Polyacrylatlösung C zusammen mit, bezogen auf Gesamtfeststoffgehalt, 15 w-% Saccharoseoctabenzoat und 20 w-% Pinecrystal KE-311 in 200 ml Butanon gelöst. Die so erhaltene Lösemittelhaftklebemasse wird mit 1,95 g ZnCl2-Lösung (10 w-% in Isopropanol) und 0,975 g Desmodur L75-Lösung (10 w-% in Ethylacetat/Toluol, Verhältnis 1:8) vernetzt, mittels Rakel auf eine 50 μm dicke silikonisierte Polyesterfolie ausgestrichen und im Trockenschrank getrocknet. Die Schichtdicke der Haftklebeschicht lag bei 100 μm. Sie wird mit einer Lage eines 36 μm dicken silikonisierten Polyesterliners eingedeckt. Es wurde so eine Transferklebefolie erhalten. Entsprechend dimensionierte Streifen werden Testmethode B und C unterworfen. Es ergaben sich eine Klebkraft (Stahl) von 12 N/cm, eine Klebkraft (Glas) von 6,8 N/cm, eine Klebkraft (PE) von 3,3 N/cm, ein maximaler Mikro-

scherweg von 350 μm und ein elastischer Anteil von 71%. Die Scherstandzeit betrug 1800 Minuten.

Eine Farbmessung nach Testmethode D (Muster der Haftklebeschicht 100 μm Dicke, Dimensionen 5 cm × 5 cm)ergab einen L*-Wert von 99,7, einen a*-Wert von -0,1, einen b*-Wert von 0,4 und eine Haze-Messung nach Testmethode E ergab einen Haze-Wert von 0,26 %. Von den Mustern ging kein Geruch aus. Nach 4 Wochen Feuchtwärmelagerung (85 °C, 85 % relative Luftfeuchte) wurde einen b*-Wert von 0,9 und eine Haze-Wert von 0,3 % festgestellt. Nach 1 Woche unter UV-Bestrahlung wurde einen b*-Wert von 0,8 und eine Haze-Wert von 0,27 % festgestellt.

*Beispiel 4: - Klebmasse K(D)*

In einem dafür geeigneten Abmischtank werden 147,7 kg der Polyacrylatmasse D mit einem Feststoffgehalt von 44% zusammen mit 20 w-% (bezogen auf Gesamtfeststoffgehalt) Saccharoseoctabenzoat und 10 w-% Kristalex F85 gelöst. Die so erhaltene Lösemittelhaftklebemasse wird weiterhin mit jeweils 0,5 w-% UV-Schutzmittel Tinuvin 571, Antioxidationsmittel Weston 399 und Antioxidationsmittel Irganox 3052 abgemischt. Anschließend wird mittels Einschneckenextruder (Aufkonzentrationsextruder, BERSTORFF GmbH, Deutschland) das Lösemittel entfernt (Restlösemittelgehalt ≤ 0,3 Gew.-%; vgl. bei den einzelnen Beispielen). Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%. Eine Farbmessung nach Testmethode D (Muster der Haftklebeschicht 100 μm Dicke, Dimensionen 5 cm × 5 cm) ergab einen b*-Wert von 0,1 und eine Haze-Messung nach Testmethode E ergab einen Haze-Wert von 0,3 %.

*Beispiel 5: Schmelzhaftkleber K(DD)*

Die nach dem oben erläuterten Beispiel 4 aufkonzentrierte Klebmasse K(D) wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über das Feststoffdosiersystem wurden bezogen auf die Gesamtmasse K(DD), 5 w-% Füllstoff Titandioxid Ti-Pure-R-105 als Zuschlagsstoff dosiert und homogen eingemischt. Für die Compoundierung wurden die Parameter so gewählt, dass die Drehzahl 451 U/min und der Motorstrom 42 A betrugen. Es wurde ein Durchsatz von 30,1 kg/h realisiert. Die Temperaturen der Zonen 1 und 2 betrugen jeweils 105 °C, die Schmelzetemperatur in Zone 1 betrug 117 °C und die Massetemperatur bei Austritt (Zone 3) bei 100 °C.

*Beispiel 6: - Vernetzte Klebmasse K(DDD)*

Der nach den zuvor beschriebenen Verfahren 5 hergestellten Acrylatschmelzhaftkleber K(DD) wurde in einem Fütterextruder (Einschneckenförderextruder der Firma TROESTER GmbH & Co KG, Deutschland) aufgeschmolzen und mit diesem als Polymerschmelze in einen Doppelschneckenextruder (Fa. LEISTRITZ, Deutschland, Bez. LSM 30/34) gefördert. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer und Beschleuniger erfolgt mit geeignetem Dosierequipment an mehreren Stellen und unter Verwendung von Dosierhilfsmitteln in die druckfreien Förderzonen des Doppelschneckenextruders. Beim hier verwendeten Vernetzer-Beschleuniger-System wurde 0,22 Gew.% des Polypox R16 und 0,52 Gew.% IPDA (jeweils bezogen auf Acrylatcopolymer) zudosiert.

Nach Austritt der fertig compoundierten, d.h. mit dem Vernetzer-Beschleuniger-System abgemischten Klebmasse aus dem Doppelschneckenextruder (Austritt: Runddüse, 5 mm Durchmesser), erfolgt zwischen zwei Walzen die Beschichtung auf ein bahnförmiges Trägermaterial (Die zwei Walzen sind derart angeordnet, dass sie einen Spalt bilden, in welchen die Selbstklebemasse eingebracht wird. Die erste Walze (Beschichtungswalze) führt den Träger (silikonisierte Polyesterfolie) auf die Selbstklebemasse, die beschichtet werden soll. Die zweite Walze (Rakelwalze) führt einen zweiten antiadhäsiv ausgerüsteten Hilfsträger (silikonisierten Polyesterliners) und presst mittels des Hilfsträgers auf die Kleb-masse, so dass diese auf den Träger als Schicht abgelegt wird. Anschließend wird das Transferkleband bestehend aus der Klebemassenschicht zwischen zwei Trägern aus der Beschichtungsanlage herausgeführt.)

Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer-Beschleuniger-System abgemischte Klebmasse bzw. die viskoelastische Trägerschicht mit optisch gutem Strichbild (gelfrei, stippenfrei) beschichtet werden kann. Die Beschichtung erfolgt mit Bahngeschwindigkeiten zwischen 1 m/min und 20 m/min.

Es wurde so eine Transferklebefolie erhalten. Die Schichtdicke der Haftklebeschicht lag bei 100 µm. Entsprechend dimensionierte Streifen werden Testmethode B und C unterworfen.

Es ergaben sich eine Klebkraft (Stahl) von 7,2 N/cm, eine Klebkraft (Glas) von 4,9 N/cm, eine Klebkraft (PMMA) von 4,8 N/cm, eine Klebkraft (PE) von 1,8 N/cm, ein maximaler Mikroscherweg von 123 µm und ein elastischer Anteil von 72%.

Eine Farbmessung nach Testmethode D (Muster der Haftklebeschicht 100 µm Dicke, Dimensionen 5 cm × 5 cm) ergab einen b*-Wert von 0,17, eine Haze-Messung nach Testmethode E wurde nicht durchgeführt. Von den Mustern ging kein Geruch aus. Nach 4 Wochen Feuchtwärmelagerung (85 °C, 85 % relative Luftfeuchte) wurde einen b*-Wert von 0,9 festgestellt. Nach einer Woche unter UV-Bestrahlung wurde einen b*-Wert von 0,8 festgestellt.

### Beispiel 7: - Klebmasse K(E)

In einem dafür geeigneten Glasgefäß werden 258 g Polyacrylatmasse E mit einem Feststoffgehalt von 33 % zusammen mit, auf den Gesamtfeststoffgehalt bezogen, 10 % Saccharoseoctabenzoat und 5 % Paraloid DM-55 zusammen mit 27 g Butanon gelöst. Die so erhaltene Lösemittelhaftklebemasse wird mit 0,3% Aluminiumacetylaceonat (3%-ige Lösung in Aceton) vernetzt, mittels Rakel auf eine 50 µm dicke silikonisierte Polyesterfolie ausgestrichen und im Trockenschrank getrocknet. Die Schichtdicke der Haftklebeschicht lag bei 100 µm. Sie wird mit einer Lage eines 36 µm dicken silikonisierten Polyesterliners eingedeckt. Es wurde so eine Transferklebefolie erhalten. Entsprechend dimensionierte Streifen werden Testmethode B und C unterworfen. Es ergaben sich eine Klebkraft (Stahl) von 10,5 N/cm, eine Klebkraft (Glas) von 3,7 N/cm, eine Klebkraft (PE) von 0,6 N/cm, ein maximaler Mikroscherweg von 60 µm und ein elastischer Anteil von 83 %.

Eine Farbmessung nach Testmethode D (Muster der Haftklebeschicht 100 µm Dicke, Dimensionen 5 cm × 5 cm) ergab einen L*-Wert von 99,6, einen a*-Wert von -0,02, einen b*-Wert von 0,08 und eine Haze-Messung nach Testmethode E ergab einen Haze-Wert von 0,3 %. Von den Mustern ging kein Geruch aus. Nach vier Wochen Feuchtwärmelagerung (85 °C, 85 % relative Luftfeuchte) wurde einen b*-Wert von 0,25 und eine Haze-Wert von 0,3 % festgestellt. Nach 1 Woche unter UV-Bestrahlung wurde einen b*-Wert von 0,3 und eine Haze-Wert von 0,3 % festgestellt.

### Gegenbeispiel X: - Klebmasse K(X)

In einem dafür geeigneten Glasgefäß werden 159 g der Polyacrylatlösung A mit einem Feststoffgehalt von 44% zusammen mit, bezogen auf den Gesamtfeststoffgehalt, 30% Terpenphenolharz Dertophene T 110 (DRT) und 111 ml Butanon gelöst. Die so erhaltene Lösemittelhaftklebemasse K(X) wird mit 0,3% Aluminiumacetylacetonat (3 %-ige Lösung in Aceton) vernetzt, mittels Rakel auf eine 50 µm dicke silikonisierte Polyesterfolie ausgestrichen und im Trockenschrank getrocknet. Die Schichtdicke der Haftklebeschicht lag bei 100 µm. Sie wird mit einer Lage eines 36 µm dicken silikonisierten Polyesterliners eingedeckt. Entsprechend dimensionierte Streifen werden Testmethode B und C unterworfen. Es ergaben sich eine Klebkraft (Stahl) von 8,7 N/cm, eine Klebkraft (Glas) von 5,7 N/cm, eine Klebkraft (PE) von 2,3 N/cm, ein maximaler Mikroscherweg von 180 µm und ein elastischer Anteil von 62%.

Eine Farbmessung nach Testmethode D (Muster der Haftklebeschicht 100 µm Dicke, Dimensionen 5 cm × 5 cm) ergab einen L*-Wert von 99,4, einen a*-Wert von -0,8, einen b*-Wert von 3,7 und eine Haze-Messung nach Testmethode E ergab einen Haze-Wert von 0,5 %. Von den Mustern ging kein signifikanter Geruch aus. Nach vier Wochen Feuchtwärmelagerung (85 °C, 85 % relative Luftfeuchte) wurde einen b*-Wert von 14,2 und eine Haze-Wert von 0,5 % festgestellt. Nach einer Woche unter UV-Bestrahlung wurde einen b*-Wert von 15,3 und eine Haze-Wert von 0,5 % festgestellt.

### Gegenbeispiel Y: - Bereitstellung Klebmasse K(Y)

In einem dafür geeigneten Glasgefäß werden 159 g der Polyacrylatlösung A mit einem Feststoffgehalt von 44% zusammen mit, bezogen auf den Gesamtfeststoffgehalt, 30% styrolmodifiziertes Terpenphenolharz Sylvares 520 (Arizona Chemical) und 111 ml Butanon gelöst. Die so erhaltene Lösemittelhaftklebemasse K(Y) wird mit 0,3% Aluminiumacetylacetonat (3 %-ige Lösung in Aceton) vernetzt, mittels Rakel auf eine 50 µm dicke silikonisierte Polyesterfolie ausgestrichen und im Trockenschrank getrocknet. Die Schichtdicke der Haftklebeschicht lag bei 100 µm. Sie wird mit einer Lage eines 36 µm dicken silikonisierten Polyesterliners eingedeckt. Es wurde so eine Transferklebefolie erhalten.

Entsprechend dimensionierte Streifen werden Testmethode B und C unterworfen. Es ergaben sich eine Klebkraft (Stahl) von 7,6 N/cm, eine Klebkraft (Glas) von 5,0 N/cm, eine Klebkraft (PE) von 1,9 N/cm, ein Mikroscherweg von 257 µm und ein elastischer Anteil von 71%.

Eine Farbmessung nach Testmethode D (Muster der Haftklebeschicht 100 µm Dicke, Dimensionen 5 cm × 5 cm) ergab einen b*-Wert von 1,0 und eine Haze-Messung nach Testmethode E ergab einen Haze-Wert von 0,7 %. Von den Mustern ging ein schwacher Geruch aus. Nach 4 Wochen Feuchtwärmelagerung (85 °C, 85 % relative Luftfeuchte) wurde einen b*-Wert von 11,8 und eine Haze-Wert von 1,0 % festgestellt. Nach 1 Woche unter UV-Bestrahlung wurde einen b*-Wert von 12,0 und eine Haze-Wert von 0,7 % festgestellt.

### Gegenbeispiel Z: - Bereitstellung Klebmasse K(Z)

In einem dafür geeigneten Glasgefäß werden 212 g der Polyacrylatlösung AA mit einem Feststoffgehalt von 33% zusammen mit, bezogen auf den Gesamtfeststoffgehalt, 30% Kohlenwasserstoffharz Clearon P 115 und 78 ml Butanon gelöst. Die so erhaltene Lösemittelhaftklebemasse K(Z) wird mit 0,3% Aluminiumacetylacetonat (3 %-ige Lösung in Aceton) vernetzt, mittels Rakel auf eine 50 μm dicke silikonisierte Polyesterfolie ausgestrichen und im Trockenschrank getrocknet. Die Schichtdicke der Haftklebeschicht lag bei 100 μm. Sie wird mit einer Lage eines 36 μm dicken silikoni-sierten Polyesterliners eingedeckt. Es wurde so eine Transferklebefolie erhalten.

Die Lappenmuster zeigen eine mit bloßem Auge deutlich sichtbare Trübung mit einen Haze Wert von 7,2%, der b*-Wert nach Testmethode D (Muster der Haftklebeschicht 100 μm Dicke, Dimensionen 5 cm × 5 cm) lag bei 0,17. Das Gegenbeispiel belegt dass eine Kombination von farblos klarem harz mit farblos klarem Polymer nicht notwendigerweise zu einer farblos klaren Klebmasse führen.

### Ergebnisse

Beispiel 1 zeigt, dass die erfindungsgemäße Haftklebemasse enthalten Saccharidderivate hervorragende Eigenschaften besitzt. Es wird ein besonders farbloser und transparenter Film mit sehr geringen Haze- und b*-Werten erhalten. Die Filme sind alterungsstabil und farbstabil, da sich weder nach Temperaturlagerung noch nach UV-Bestrahlung eine signifikante Farb- bzw. Trübungsänderung ergibt.

Beispiel 2 zeigt eine weitere Umsetzung der Erfindung, bei der die Haftklebemasse acrylsäurefrei ist. Es wird ein Gemisch von Saccharidderivaten eingesetzt. Es wird ein besonders farbloser und transparenter Film mit sehr geringen Haze- und b*-Werten erhalten.

Die Filme sind alterungsstabil und farbstabil, da sich weder nach Temperaturlagerung noch nach UV-Bestrahlung eine signifikante Farb- bzw. Trübungsänderung ergibt.

Beispiel 3 zeigt eine erfindungsgmäße Haftklebemasse auf Basis eines (Meth)acrylatpolymers mit einem Saccharidderivat und einem Kolophoniumharz. Als Vernetzungssystem wird einpolymerisiertes Glyzidylmethacrylat zusam-men mit ZnCl verwendet. Es wird ein besonders farbloser und transparenter Film mit sehr geringen Haze- und b*-Werten erhalten. Die Klebefilme sind alterungsstabil und farbstabil, da sich weder nach Temperaturlagerung noch nach UV-Bestrahlung eine signifikante Farb- bzw. Trübungsänderung ergibt.

Beispiel 4 zeigt die Verwendung von Saccharidderivaten zusammen mit Kohlenwasserstoffharzen in einer hotmeltbasierten Haftklebemasse Es wird trotz starker thermischer Belastung ein besonders farbloses und transparentes System mit sehr geringen Haze- und b*-Werten erhalten.

Beispiel 6 zeigt den Einsatz von Saccharidderivaten in hotmelt-basierten Haftklebemassen auf Basis von Acrylatpolymeren zusammen mit weißen Pigmenten sowie farblosen Zuschlagstoffen (farbloses Harz). Es wird eine besonders weiße Haftklebemasse mit sehr geringen b*-Werten erhalten. Die Klebefilme sind alterungsstabil und farbstabil, bei der sich weder nach Temperaturlagerung noch nach UV-Bestrahlung eine signifikante Farbänderung ergibt.

Beispiel 7 zeigt die Verwendung der Saccharidderivate und eines Acrylatharzes zusammen mit einem Chaelat-Vernetzersystem in der erfindungsgemäßen Haftklebemasse. Es wird ein besonders farbloser und transparenter Film mit sehr geringen Haze- und b*-Werten erhalten. Die Filme sind alterungsstabil und farbstabil, da sich weder nach Temperaturlagerung noch nach UV-Bestrahlung eine signifikante Farb- bzw. Trübungsänderung ergibt.

Gegenbeispiel X zeigt im Vergleich den Einsatz eines Terpenphenolharzes zusammen mit einem Acrylatpolymer. Es wird kein farbloser Film (hoher b*-Wert) erhalten. Die Filme sind weder alterungsstabil noch farbstabil, da sich nach Temperaturlagerung oder nach UV-Bestrahlung eine signifikante Farb- bzw. Trübungsänderung ergibt.

Gegenbeispiel Y zeigt im Vergleich den Einsatz eines farblosen Terpenphenolharzes zusammen mit einem Acrylatpolymer. Es wird zwar ein farbloser, transparenter Film erhalten, jedoch sind die Filme weder alterungsstabil noch farbstabil, da sich nach Temperaturlagerung oder nach UV-Bestrahlung eine signifikante Farb- bzw. Trübungsänderung ergibt (Vergilbung nach Alterung).

Gegenbeispiel Z zeigt im Vergleich den Einsatz eines farblosen Kohlenwasserstoffharzes zusammen mit einem Acrylatpolymer. Es wird zwar ein farbloser Film erhalten, jedoch ist der Film nicht transparent und es ergibt sich eine Trübung aufgrund einer Unverträglichkeit nach der Trocknung/Beschichtung.

### Patentansprüche

1. Haftklebemasse umfassend

mindestens 30 Gew.-% einer Polymerkomponente,

bis zu 50 Gew.-% (bezogen auf die Haftklebemasse) einer Saccharid-Komponente,

wobei die Saccharid-Komponente aus einem oder mehreren Saccharidderivaten, gewählt aus der Liste aus Glucoseacetat, Glucosebenzoat, Saccharoseacetat, Saccharosebenzoat und einer Mischung von Hexa-, Hepta- und Octaestern aus der Veresterung von Saccharose mit den Fettsäuren aus Rapsöl, Sonnenblumenöl oder Palmöl gebildet wird und

als Polymerkomponente lösemittelbasierte Polyacrylate, lösemittelfreie Polyacrylate oder in Wasser dispergierte Polyacrylate mit einem Feststoffgehalt zwischen 25 % und 75 % eingesetzt werden.

2. Haftklebemasse nach Anspruch 1, **dadurch gekennzeichnet, dass** die Saccharid-Komponente zu 5 bis 40 Gew.-% in der Haftklebemasse enthalten ist.

3. Haftklebemasse nach einem der vorangehenden Ansprüche, **dadurch gekennzeichnet, dass** die Saccharidkomponente drei oder vier Saccharidderivate umfasst.

4. Verwendung einer Haftklebemasse umfassend eine Polymerkomponente sowie einer aus einem oder mehreren Mono-, Di-, Oligo- oder Polysacchariden und/oder einem oder mehreren modifizierten Saccharidderivaten gebildeten Saccharid-Komponente, in der Elektronikindustrie und/oder zur Verklebung zweier Substrate miteinander zu einem Verbund, wobei der Verbund Bestandteil eines optischen, elektronischen und/oder feinmechanischen Geräts ist,

5. Verwendung nach Anspruch 4 in einem transportablen optischen, elektronischen oder feinmechanischen Gerät.

6. Verwendung nach Anspruch 4 oder 5, **dadurch gekennzeichnet, dass** zumindest eines der Substrate durchsichtig oder durchscheinend ist.

7. Verwendung nach Anspruch 6, **dadurch gekennzeichnet, dass** das durchsichtige bzw. durchscheinende Substrat ein Fenster oder eine Linse zum Zwecke des Schutzes darunter angeordneter Komponenten und/oder zur Bewirkung physiko-optischer Effekte für die Funktion des optischen, elektronischen oder feinmechanischen Geräts ist.

8. Verwendung nach einem der Ansprüche 5 bis 7, **dadurch gekennzeichnet, dass** das optische, elektronische oder feinmechanische Gerät gewählt ist aus der Gruppe umfassend:

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras, Digicams, Fernsichtgeräte, Nachtsichtgeräte
- Computer, Laptops, Notebooks, Netbooks, Ultrabooks, Tablet-Computer, Geräte mit berührungsempfindlichen Bildschirmen ("Touchscreen-Geräte"), Handhelds, elektronische Terminkalender und Organisatoren (sogenannte "Electronic Organizer" oder "Personal Digital Assistants", PDA), Schreibmaschinen, Modems, Computer-Zubehörgeräte, wie Mäuse, Zeichenpads, Mikrophone, Lautsprecher
- Lesegeräte für elektronische Bücher ("e-Books"),
- Fernseher (auch Mini-Fernsehgeräte), Filmabspielgeräte, Videoabspielgeräte, Monitore, Bildschirme, Displays, Beamer
- Radios, Walkmen, Musikabspielgeräte (z.B. CD, DVD, Blueray, Kassetten, USB, MP3-Player), Kopfhörer
- Drucker, Faxgeräte, Kopiergeräte,
- Telefone, Mobiltelefone, Smartphones, Funksprechgeräte, Freisprechgeräte
- Defibrilatoren, Blutzuckermessgeräte, Blutdruckmessgeräte
- Akkumulatorladegeräte, Messgeräte, Multimeter, Lampen, wie Taschenlampen, Laserpointer etc
- Detektoren, optische Vergrößerungsgeräte, Taschenrechner
- Fernsteuerungen, Fernbedienungen, Spielkonsolen
- GPS-Geräte, Navigationsgeräte
- Personenrufgeräte (Pager, Pieper)
- Datenspeichergeräte (USB-Sticks, externe Festplatten, Speicherkarten)
- Armbanduhren, Taschenuhren, Kettenuhren.

**Claims**

1. Pressure sensitive adhesive comprising

at least 30 wt% of a polymer component,
up to 50 wt% (based on the adhesive) of a saccharide component,
where the saccharide component is formed of one or more saccharide derivatives selected from the list composed of glucose acetate, glucose benzoate, sucrose acetate, sucrose benzoate and a mixture of hexa, hepta and octa esters from the esterification of sucrose with the fatty acids from rapeseed oil, sunflower oil or palm oil, and the polymer component used comprises solvent-based polyacrylates, solvent-free polyacrylates or aqueously dispersed polyacrylates with a solids content of between 25% and 75%.

2. Pressure sensitive adhesive according to Claim 1, **characterized in that** the saccharide component is present at 5 to 40 wt% in the adhesive.

3. Pressure sensitive adhesive according to either of the preceding claims, **characterized in that** the saccharide component comprises three or four saccharide derivatives.

4. Use of a pressure sensitive adhesive comprising a polymer component and also a saccharide component formed of one or more mono-, di-, oligo- or polysaccharides and/or one or more modified saccharide derivatives, in the electronics industry and/or for bonding two substrates to one another to form an assembly, the assembly being part of an optical, electronic and/or precision-mechanical device.

5. Use according to Claim 4 in a portable optical, electronic or precision-mechanical device.

6. Use according to Claim 4 or 5, **characterized in that** at least one of the substrates is transparent or translucent.

7. Use according to Claim 6, **characterized in that** the transparent or translucent substrate is a window or a lens for the purpose of protecting components situated beneath and/or for producing physico-optical effects for the function of the optical, electronic or precision-mechanical device.

8. Use according to any of Claims 5 to 7, **characterized in that** the optical, electronic or precision-mechanical device is selected from the group encompassing:

- cameras, digital cameras, photographic accessories (such as light meters, flash devices, diaphragms, camera casings, lenses, etc.), film cameras, video cameras, digicams, distance vision devices, night vision devices,
- computers, laptops, notebooks, netbooks, ultrabooks, tablet computers, devices with touch-sensitive screens (touchscreen devices), handhelds, electronic diaries and organizers (known as electronic organizers or personal digital assistants, PDAs), writing machines, modems, computer accessories, such as mice, drawing pads, microphones, speakers,
- reading devices for electronic books (e-books),
- televisions (including mini-televisions), film players, video players, monitors, screens, displays, projectors,
- radios, Walkmans, music players (e.g. CD, DVD, Blu-ray, cassette, USB, MP3 players), headphones,
- printers, faxes, copiers,
- telephones, cellphones, smartphones, two-way radios, hands-free devices,
- defibrillators, blood sugar meters, blood pressure monitors,
- battery chargers, measuring instruments, multimeters, lamps, such as torches, laser pointers, etc,
- detectors, optical magnifiers, calculators,
- remote controls, remote operation devices, games consoles,
- GPS devices, navigation devices,
- devices for summoning people (pagers, bleepers),
- data storage devices (USB sticks, external hard drives, memory cards),
- wristwatches, pocket watches, chain watches.

**Revendications**

1. Masse adhésive de contact comprenant

au moins 30 % en poids d'un composant polymère,
jusqu'à 50 % en poids (par rapport à la masse adhésive de contact) d'un composant saccharide,

le composant saccharide étant formé à partir d'un ou plusieurs dérivés saccharidiques choisis dans la liste consistant en l'acétate de glucose, le benzoate de glucose, l'acétate de saccharose, le benzoate de saccharose et un mélange d'hexa-, d'hepta- et d'octaesters obtenus par estérification du saccharose avec les acides gras de l'huile de colza, de l'huile de tournesol ou de l'huile de palme et

on utilise comme composant polymère des polyacrylates aux solvants, des polyacrylates sans solvant ou des polyacrylates dispersés dans l'eau, ayant un taux d'extrait sec entre 25 % et 75 %.

**2.** Masse adhésive de contact selon la revendication 1, **caractérisée en ce que** la quantité du composant saccharide dans la masse adhésive de contact est de 5 à 40 % en poids.

**3.** Masse adhésive de contact selon l'une des revendications précédentes, **caractérisée en ce que** le composant saccharide comprend trois ou quatre dérivés saccharidiques.

**4.** Utilisation d'une masse adhésive de contact comprenant un composant polymère ainsi qu'un composant saccharide, formé à partir d'un ou plusieurs mono-, di-, oligo- ou polysaccharides et/ou d'un ou plusieurs dérivés saccharidiques modifiés, dans l'industrie électronique et/ou pour coller deux substrats l'un à l'autre en formant un assemblage collé, l'assemblage collé étant un constituant d'un appareil optique, électronique et/ou de la mécanique fine.

**5.** Utilisation selon la revendication 4 dans un appareil optique, électronique ou de la mécanique fine, qui est transportable.

**6.** Utilisation selon la revendication 4 ou 5, **caractérisée en ce qu'**au moins l'un des substrats est transparent ou translucide.

**7.** Utilisation selon la revendication 6, **caractérisée en ce que** le substrat transparent ou translucide est une fenêtre ou une lentille, destinée à protéger les composants disposés en dessous, et/ou pour réaliser des effets physico-optiques pour la fonction de l'appareil optique, électronique ou de la mécanique fine.

**8.** Utilisation selon l'une des revendications 5 à 7, **caractérisée en ce que** l'appareil optique, électronique ou de la mécanique fine est choisi dans le groupe comprenant les appareils suivants :

• appareils photographiques, caméras numériques, accessoires pour photographie (tels qu'exposimètres, dispositifs flash, diaphragmes, boîtiers, objectifs, etc.), caméras cinématographiques, caméras vidéo, appareils photonumériques, téléviseurs, appareils de vision nocturne
• ordinateurs, ordinateurs portables, bloc-notes électroniques, miniportatifs, ultraportatifs, tablettes électroniques, appareils à écran tactile (« appareils Touchscreen »), terminaux mobiles, agendas électroniques et organiseurs (appelés « Electronic Organizer » ou « Personnal Digital Assistants », PDA), machines à écrire, modems, accessoires d'ordinateur tels que souris, pads de caractères, microphones, haut-parleurs
• liseuses de livres électroniques (« e-Books »),
• téléviseurs (et aussi mini-téléviseurs), lecteurs de film, lecteurs vidéo, moniteurs, écrans, affichages, projecteurs
• appareils radio, baladeurs, lecteurs de musique (par exemple CD, DVD, Blueray, cassettes, USB, lecteurs MP3), écouteurs
• imprimantes, télécopieurs, photocopieurs,
• téléphones, téléphones mobiles, mobiles multifonction, radios bidimensionnelles, téléphones mains-libres
• défibrillateurs, glucomètres, tensiomètres
• chargeurs d'accumulateur, appareils de mesure, multimètres, lampes telles que lampes de poche, pointeurs laser, etc.
• détecteurs, agrandisseurs optiques, calculatrices de poche
• téléguidages, télécommandes, consoles de jeu
• appareils GPS, navigateurs
• téléavertisseurs (Pager, Pieper)
• appareils de stockage de données (clés USB, disques durs externes, cartes mémoire)
• montres bracelets, montres goussets, montres à chaîne.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005063906 A
- DE 20315592 U
- EP 1548080 A
- KR 20100102443
- US 3447954 A
- WO 2011092108 A

**In der Beschreibung aufgeführte Nicht-Patentliteratur**

- *Methoden der Organischen Chemie,* vol. 19a, 60-147